# EUROPEAN PATENT APPLICATION

(11) **EP 1 605 462 A1**
(43) Date of publication of application: **14.12.2005**
(21) Application number: 04719074.9
(22) Date of filing: 10.03.2004
(51) Int. Cl.: G11B 20/10, G11B 20/12, G11B 7/005, H04N 5/91, G06F 12/14

(54) **RECORDING MEDIUM, MANUFACTURING METHOD THEREOF, REPRODUCTION METHOD, REPRODUCTION DEVICE, AND COPYRIGHT MANAGEMENT METHOD**

(30) Priority: 20.03.2003 JP 2003078375
(71) Applicant: SONY CORPORATION, Tokyo 141-0001 (JP); Sony Pictures Entertainment Inc., Culver City, CA 90232 (US)
(72) Inventor: KITANI, Satoshi, Sony Corporation, Shinagawa-ku, Tokyo 141-0001 (JP); EKLUND, Charles Don, c/o Sony Pictures Entertain., Culver City, CA 90232 (US); SATO, Hideo, Sony Corporation, Shinagawa-ku, Tokyo 141-0001 (JP); YONEMITSU, Jun, Sony Corporation, Shinagawa-ku, Tokyo 141-0001 (JP); MURAMATSU, Katsumi, Sony Corporation, Shinagawa-ku, Tokyo 141-0001 (JP)
(74) Representative: Melzer, Wolfgang
(86) International application number: PCT/JP2004/003077
(87) International publication number: WO 2004/084208

(57) **Abstract**

A GUID as title information and a global serial number are recorded in a BCA of a digital video disc 60. A hash value of the GUID is embedded as an electronic watermark in a data area 64. When content data is reproduced from the digital video disc 60, a match of information of the two GUIDs is checked so as to prevent the digital video disc 60 from being illegally copied. A lead-in area 63 and a managing organization 20 provide disc revocation lists. With a global serial number and a disc revocation list, content data can be prevented from being reproduced from an illegally distributed disc. A film WM detector 84 detects data embedded in a movie shown in a theater so as to prevent content data from being reproduced from a disc on which the embedded data is recorded. Thus, content data can be prevented from being reproduced from an illegally distributed disc before a copyright supervisor of the content authorizes the disc to be distributed.

## Description

### Technical Field

The present invention relates to a recording medium, a producing method thereof, a reproducing method, a reproducing apparatus, and a copyright managing method for preventing an illegally copied content such as a movie from being used.

### Background Art

On one recording medium such as a DVD (Digital Versatile Disc), which has been recently developed, a large capacity of data for one movie can be recorded as digital information. When video information and so forth can be recorded as digital information, it will become important to protect copyright of digital information against illegal copies.

A DVD-Video disc uses as a copy protection technology the CSS (Content Scrambling System). According to the CSS contract, the CSS has been authorized for only DVD mediums, not recordable DVDs such as a DVD-R, a DVD-RW, DVD+R, DVD+RW, and so forth. Thus, according to the CSS contract, the CSS has not been authorized for the user to copy the contents of a DVD-Video disc to a recordable DVD (so-called bit-by-bit copy).

As a successor of the CSS, CPPM (Content Protection for Pre-Recorded Media) as a copyright protection technology for DVD-ROMs such as a DVD-Audio disc and CPRM (Content Protection for Recordable Media) as a copyright protection technology for recordable DVDs and memory cards have been proposed. In these systems, even if a problem about encryption for contents, storage of management information, and so forth takes place, the systems can be updated. Even if data of a whole disc is copied, the reproduction thereof can be restricted. A method for protecting copyright for DVDs is described in "Yamada, 'Spreading-out Copyright Protection Space Starting from DVD', Nikkei Electronics, 2001.8.13, pp. 143-153". The CRPM is described in "Content Protection for Recordable Media Specification DVD Book", Internet <URL: http://www.4Centrity.com/>" distributed by its licenser, 4C Entity, LLC, USA.

However, actually movie contents have been illegally copied. Since digital video cameras and HD digital video disc recording will be practically used in a commercial market, if such a situation is left unsolved, benefit of copyright owners will be seriously lost. Next, examples of illegal copy deeds will be described.

### <1. Secretly photographed in movie theater>

New movies shown in movie theaters are photographed by digital video cameras. With sources of photographed movies, DVD-Video discs are produced as ROM discs. In addition, a movie film shown in a movie theater is converted into a base band video signal by a telecine operation. With a source of the video signal, illegal DVD-Video discs are produced as ROM discs.

### <2. Copied from legally distributed DVD-Video disc (Use of "DeCSS">

DeCSS software that can break encryption of CSS has been distributed on the Internet and anyone can easily obtain it. With the DeSS, the contents of a DVD-Video disc can be decrypted and written to a recordable DVD. When the contents are brought to a DVD production factory, DVD-Video discs of the contents can be produced.

### <3. Copied from legally distributed DVD-Video disc (Using analog output)>

Since a personal computer (hereinafter sometimes referred to as PC) is not a dedicated device, it does not need to conform to CGMS-A (Copy Generation Management System - Analog) and macro-vision signal. Thus, those copy restriction schemes do not effectively work for the PC. Thus, when an output of a DVD-Video player that is input to a video capture board disposed in the PC, the output of the DVD-Video player can be copied to a HDD (Hard Disc Drive). Video data that has been recorded to the HDD can be written as non-encrypted data to a recordable DVD. When the content is brought to a DVD production factory, DVD-Video discs can be produced as ROM discs.

### <4. Copied from legally distributed DVD-Video disc (Illegally produced at DVD production factory)>

At a DVD production factory, extra DVDs may be produced when ordered DVDs are produced. The extra DVDs would be sold in an illegal market.

### <5. Copied from legally distributed DVD-Video disc (copied to original)>

An original may be made from a legally distributed DVD-Video disc. With the original disc as a copy master, DVD-Video discs may be produced as ROM discs.

So far, technical proposals for solving problems of illegal copies have not been made with respect to conventional copyright protection technologies such as the foregoing CSS, CPPM, and CPRM.

Therefore, an object of the present invention is to provide a recording medium, a producing method thereof, a reproducing method, a reproducing apparatus, and a copyright managing method that allow a profit of a copyright owner to be protected against an illegal copy of a video content.

### Disclosure of the Invention

To solve the foregoing problem, claim 1 of the present invention is a recording medium on which data of a video content is recorded, title information that represents a title of the video content or a title message necessary for assuring the trueness of the title information being embedded as electronic watermark information in data of the video content, the title information or the title message being recorded in other than a recording area for the data of the video content.

Claim 3 of the present invention is a recording medium producing method for producing a recording medium on which data of a video content is recorded, the method comprising the steps of editing the data of the video content; embedding title information that represents a title of the video content or a title message necessary for assuring the trueness of the title information as electronic watermark information in data of the video content; and recording the title information or the title message in other than a recording area for the data of the video content.

Claim 6 of the present invention is a reproducing method for a recording medium on which data of a video content is recorded, title information that represents a title of the video content or a title message necessary for assuring the trueness of the title information being embedded as electronic watermark information in data of the video content, the title information or the title message being recorded in other than a recording area for the data of the video content, the method comprising the steps of detecting the title information or the title message recorded in other than the recording area for the data; detecting title information or a title message embedded as the electronic watermark information; determining whether or not the trueness of the title information or the title message detected at the first and second title information detecting steps are assured; and restricting a reproducing operation for the recording medium when the trueness has not been assured at the determining step.

Claim 7 of the present invention is a reproducing apparatus for a recording medium on which data of a video content is recorded, title information that represents a title of the video content or a title message necessary for assuring the trueness of the title information being embedded as electronic watermark information in data of the video content, the title information or the title message being recorded in other than a recording area for the data of the video content, the apparatus comprising a first title information detecting portion for detecting the title information or the title message recorded in other than the recording area for the data; a second title information detecting portion for detecting title information or a title message embedded as the electronic watermark information; a determining portion for determining whether or not the trueness of the title information or the title message detected by the first and second title information detecting portions are assured; and a controlling portion for restricting a reproducing operation for the recording medium when the trueness has not been assured by the determining portion.

Claim 8 of the present invention is a recording medium on which data of a video content is recorded, medium identification information and a medium revocation list being recorded on the recording medium, the medium identification information uniquely identifying each of recording mediums, the medium revocation list designating a recording medium to be revoked with at least the medium identification information or an identification message necessary for assuring the trueness of the medium identification information.

Claim 14 of the present invention is a recording medium producing method for producing a recording medium on which data of a video content is recorded, the method comprising the steps of editing the data of the video content; recording a medium revocation list that designates a recording medium to be revoked with at least medium identification information or an identification message, the medium identification information uniquely identifying recording mediums, the identification message being necessary for assuring the trueness of the medium identification information; and recording the medium identification information for each medium in accordance with other than a recording method for the data of the video content.

Claim 20 of the present invention is a reproducing method for a recording medium on which data of a video content is recorded, medium identification information and a medium revocation list being recorded on the recording medium, the medium identification information uniquely identifying each of recording mediums, the medium revocation list designating a recording medium to be revoked with at least the medium identification information or an identification message necessary for assuring the trueness of the medium identification information, the method comprising the steps of reading the medium identification information; reading the medium revocation list; storing the medium identification information that has been read or the identification message of the medium identification information to a memory; determining whether or not the medium identification information or the identification message that has been stored is contained in the medium revocation list; and restricting a reproducing operation for the recording medium when the determined result at the medium list determining step represents that the recording medium should be revoked.

Claim 25 of the present invention is a reproducing method for a recording medium on which data of a video content is recorded, medium identification information being recorded on the recording medium, the medium identification information uniquely identifying each of recording mediums, the method comprising the steps of reading the medium identification information; a medium identification information storing portion for storing the medium identification information that has been read or an identification message of the medium identification information to a memory; connecting a copyright managing server through a network, receiving a medium revocation list that designates a recording medium to be revoked with the medium identification information or an identification message necessary for assuring the trueness of the medium identification information from the copyright managing server, and determining whether or not the stored medium identification information or the stored identification message of the medium identification information is contained in the medium revocation list; and restricting a reproducing operation for the recording medium when the determined result at the determining step represents that the recording medium should be revoked.

Claim 30 of the present invention is a reproducing apparatus for a recording medium on which data of a video content is recorded, the reproducing apparatus comprises a reading portion for reading medium identification information and a medium revocation list, the medium identification information uniquely identifying each of recording mediums, the medium revocation list designating a recording medium to be revoked with at least the medium identification information or an identification message necessary for assuring the trueness of the medium identification information; a medium identification information storing portion for storing the medium identification information that has been read or the identification message of the medium identification information; a determining portion for determining whether or not the stored medium identification information or the stored identification message is contained in the medium revocation list; and a controlling portion for restricting a reproducing operation for the recording medium when the determined result at the determining step represents that the recording medium should be revoked.

Claim 35 of the present invention is a reproducing apparatus for a recording medium on which data of a video content is recorded, the reproducing apparatus comprising a reading portion for reading medium identification information uniquely identifying each of recording mediums; a medium identification information storing portion for storing the medium identification information that has been read or an identification message of the medium identification information; a medium list receiving portion for receiving a medium revocation list that designates a recording medium to be revoked with the medium identification information or the identification message necessary for assuring the trueness of the medium identification information from a copyright managing server; a medium list determining portion for determining whether or not the stored medium identification information or the stored identification message is contained in the received medium revocation list; and a controlling portion for restricting a reproducing operation for the recording medium when the determined result of the medium list determining portion represents that the recording medium should be revoked.

Claim 40 of the present invention is a copyright managing method for a system of which a plurality of reproducing apparatuses and a copyright managing server authorized by a copyright supervisor are connected through a network, the copyright managing method comprising the steps of causing each of the reproducing apparatuses to record data of a video content and reproduce data from each recording medium on which medium identification information that uniquely identifies the recording medium is recorded; causing each of the reproducing apparatuses to read the medium identification information from the recording medium and transmit an identification message obtained from the medium identification information using a one-directional function; causing the copyright managing server to receive the device identification information and the identification message; causing the copyright managing server to determine whether or not the plurality of reproducing apparatuses have reproduced data from the same recording medium in accordance with a set of received data; and causing the copyright managing server to add at least the medium identification information or the identification information that designates the recording medium to the medium revocation list when a predetermined number of reproducing apparatuses have reproduced the same medium identification information from recording mediums.

Claim 41 of the present invention is a reproducing method for reproducing data of a video content from a recording medium, signature data with which a reproducing operation of a device that has a predetermined mechanism is restricted until a calendar designated by a copyright supervisor being embedded as an electronic watermark in the data of the video content, the signature data being created in accordance with time information, the reproducing method comprising the steps of detecting the signature data from the recording medium when the data of the video content is reproduced from the recording medium; creating a list of signature data as calendar information with which the reproducing operation of the device having the predetermined mechanism is restricted in accordance with the detected signature data; and restricting the reproducing operation of the device having the predetermined mechanism for a recording medium on which the signature data is recorded until a calendar designated by the copyright supervisor.

Claim 45 of the present invention is a reproducing apparatus for reproducing data of a video content from a recording medium, the reproducing apparatus comprising a signature data detecting portion for detecting signature data from the recording medium when the data of the video content is reproduced from the recording medium, the signature data with which a reproducing operation of the reproducing apparatus is restricted until a calendar designated by a copyright supervisor being embedded as an electronic watermark in the data of the video content, the signature data being created in accordance with time information; a list creating portion for creating a list of signature data as calendar information with which the reproducing operation of the reproducing apparatus is restricted in accordance with the detected signature data; and a controlling portion for restricting the reproducing operation of the reproducing apparatus for a recording medium on which the signature data is recorded until a calendar designated by the copyright supervisor as long as the signature data is contained in the list.

Claim 49 of the present invention is a copyright managing method for a copyright managing system of which a plurality of reproducing apparatuses and a copyright managing server authorized by a copyright supervisor are connected through a network, the copyright managing method comprising the steps of embedding signature data with which a reproducing operation of each of devices that have a predetermined mechanism is restricted until a calendar designated by a copyright supervisor as an electronic watermark in a video content, the signature data being created in accordance with time information; causing each of the devices to detect the signature data and create a list of the signature data as calendar information with which the reproducing operation of the device is restricted in accordance with the detected signature data; and restricting the reproducing operation of the device for a recording medium on which the signature data is recorded until a calendar designated by the copyright supervisor as long as the signature data is contained in the list.

According to the present invention, title information or a title message is embedded as electronic watermark information in data of a video content of a recording medium. The title information or the title message is recorded in other than a recording area for the data of the video content. A reproducing apparatus reads the title information or the title message that has been recorded in two different recording methods. The reproducing apparatus compares the title information or the title message that has been recorded in the first recording method with the title information or the title message that has been recorded in the second recording method. When they do not match, the reproducing apparatus can restrict the reproduction for the recording medium as an illegally distributed medium.

In addition, according to the present invention, medium identification information that uniquely identifies a recording medium is recorded to a recording medium. The reproducing apparatus compares medium identification information with a medium revocation list. When a recording medium to be revoked in the medium revocation list matches the recording medium that has been uniquely identified with the medium identification information, the reproducing apparatus can restrict the reproduction for the recording medium as an illegally distributed recording medium.

In addition, according to the present invention, signature data is embedded as an electronic watermark in a recording medium. The device reads the signature data and compares the signature data with a list of signature data created in accordance with time information. When they match, the reproducing apparatus can restrict the reproduction for the recording medium attempted to be reproduced as an illegally distributed recording medium in a non-permission period designated by a copyright supervisor.

### Brief Description of Drawings

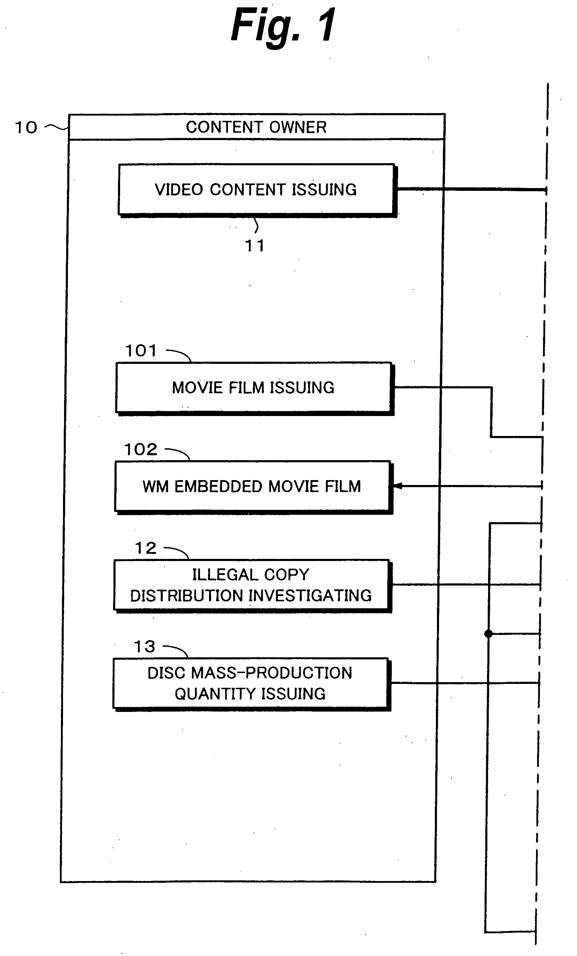

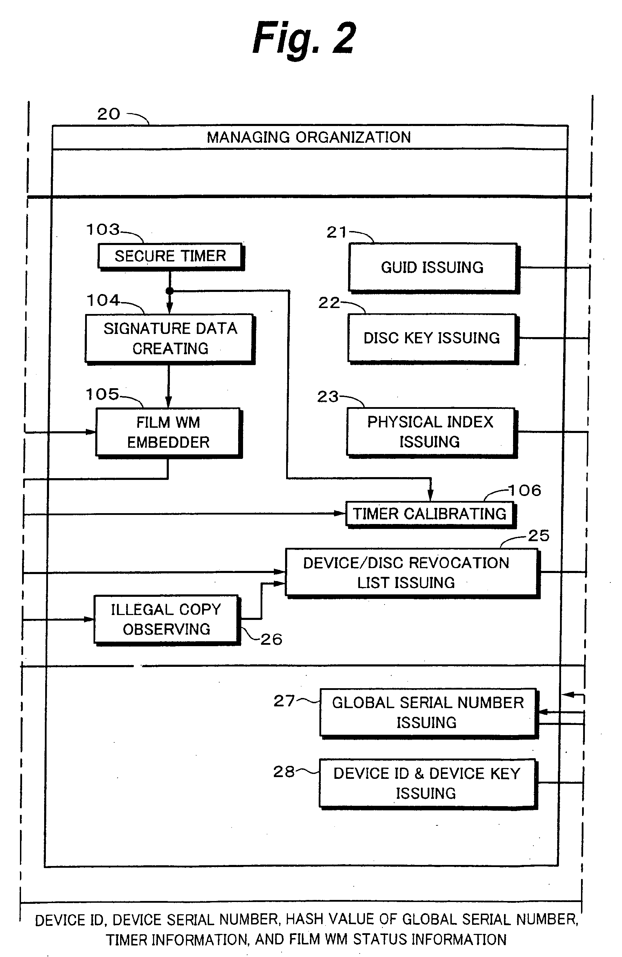

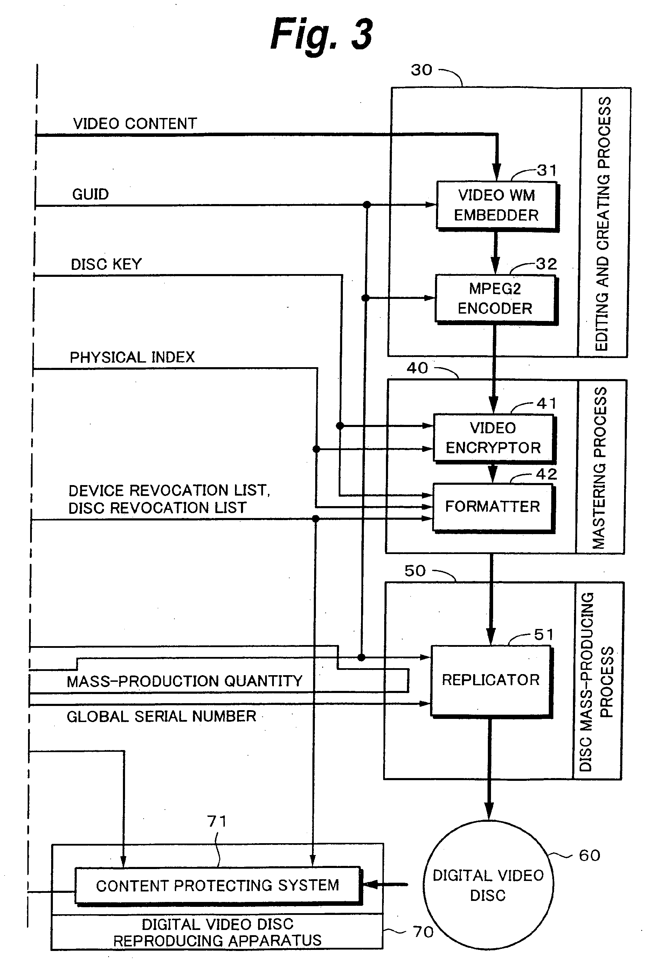

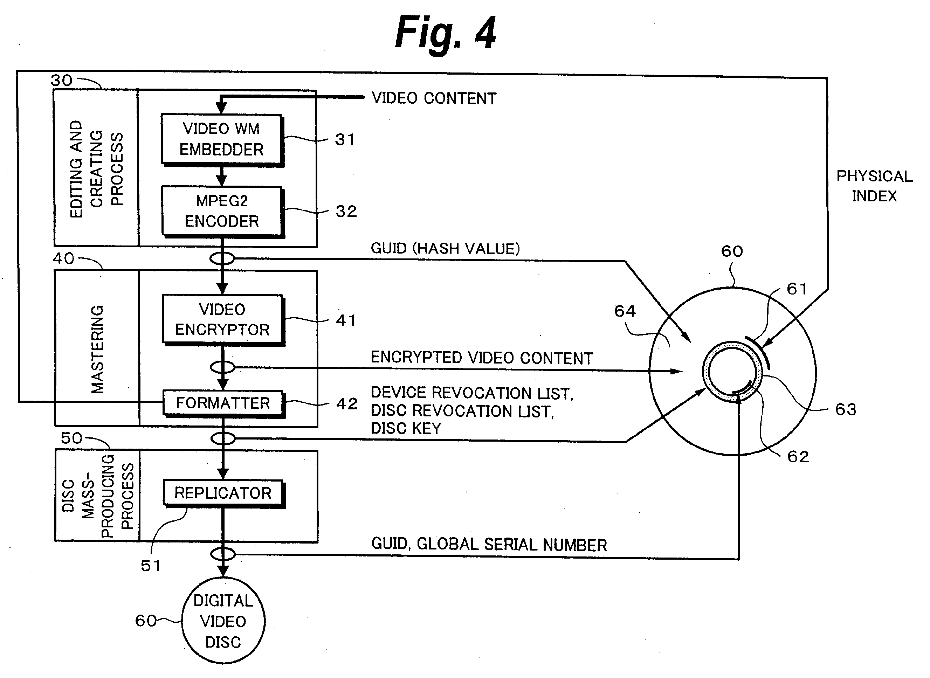

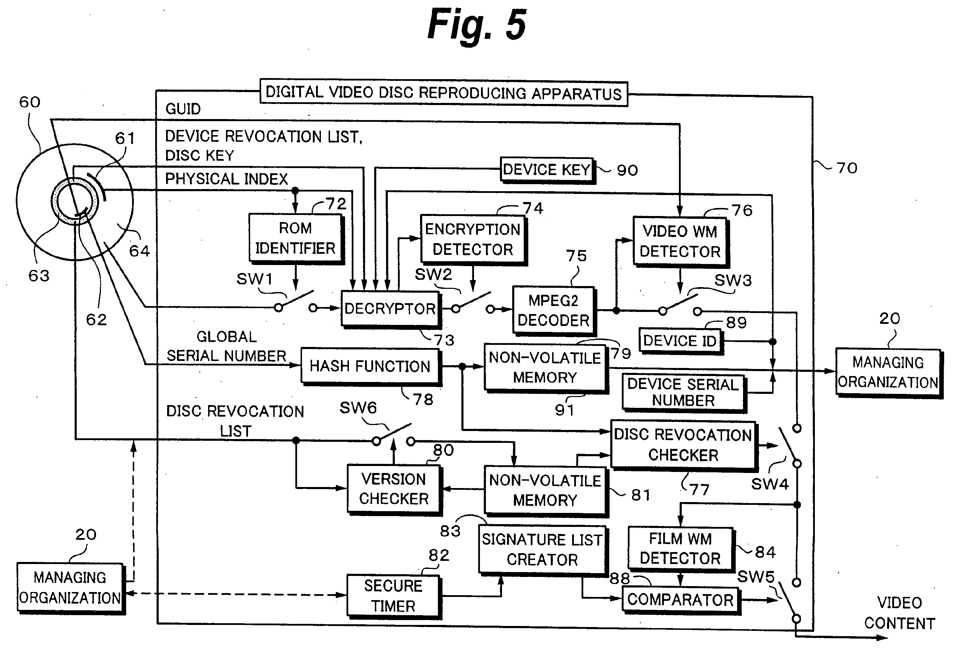

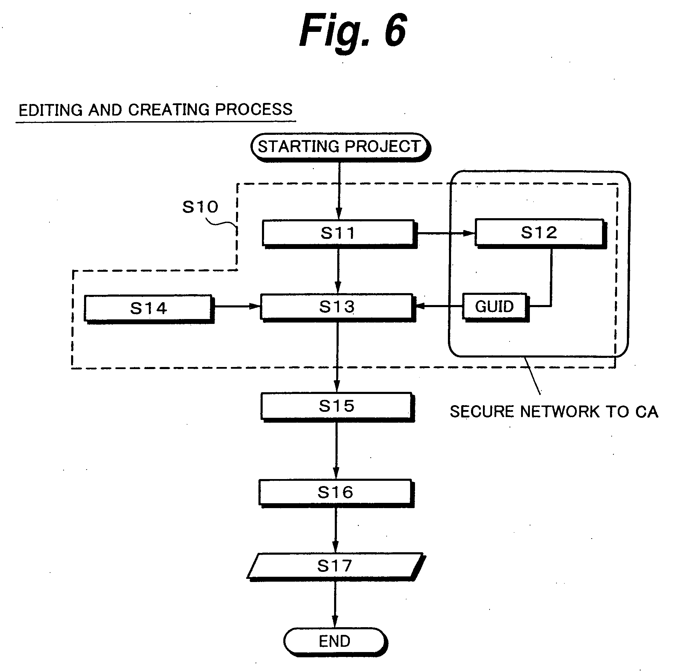

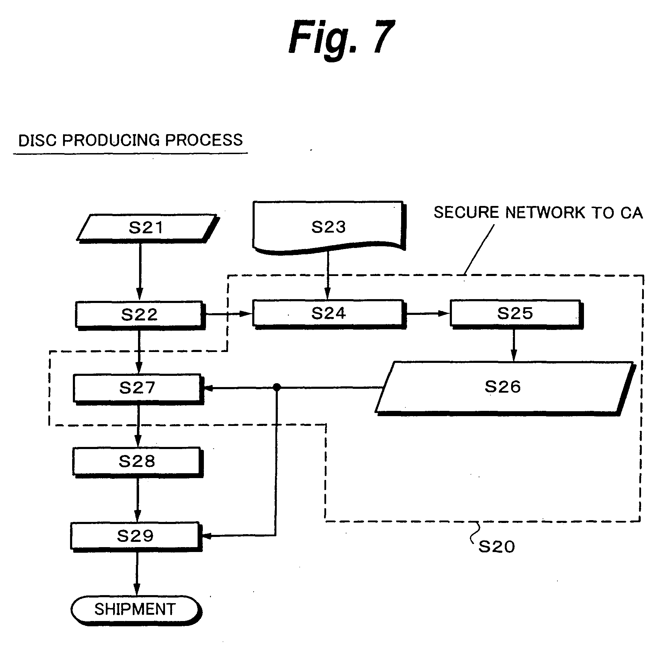

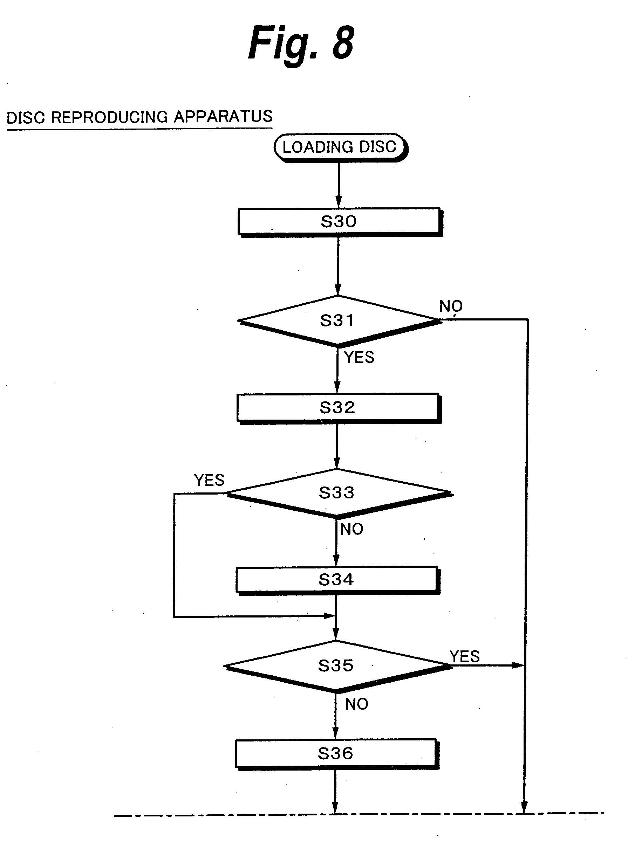

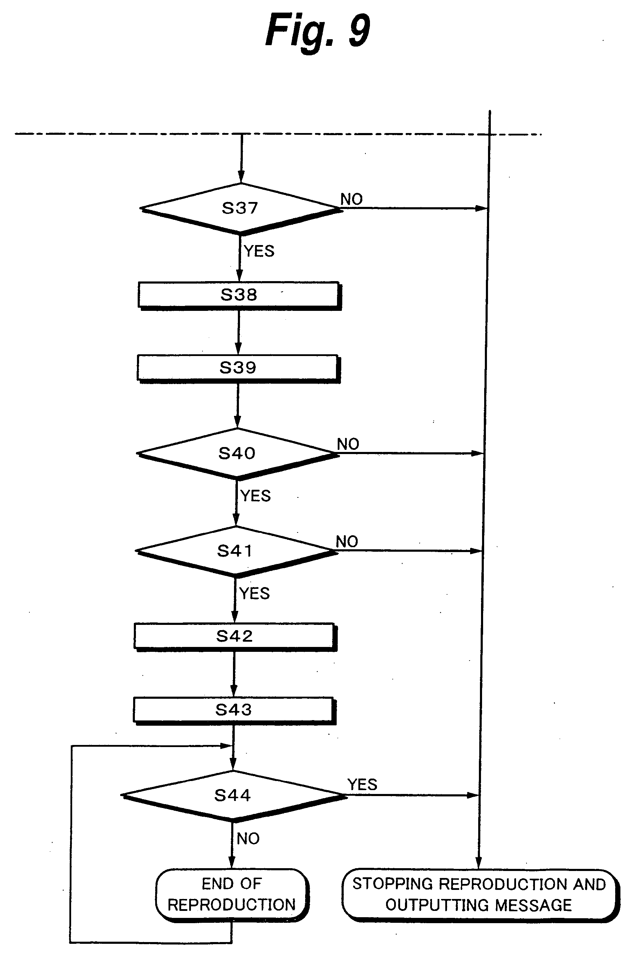

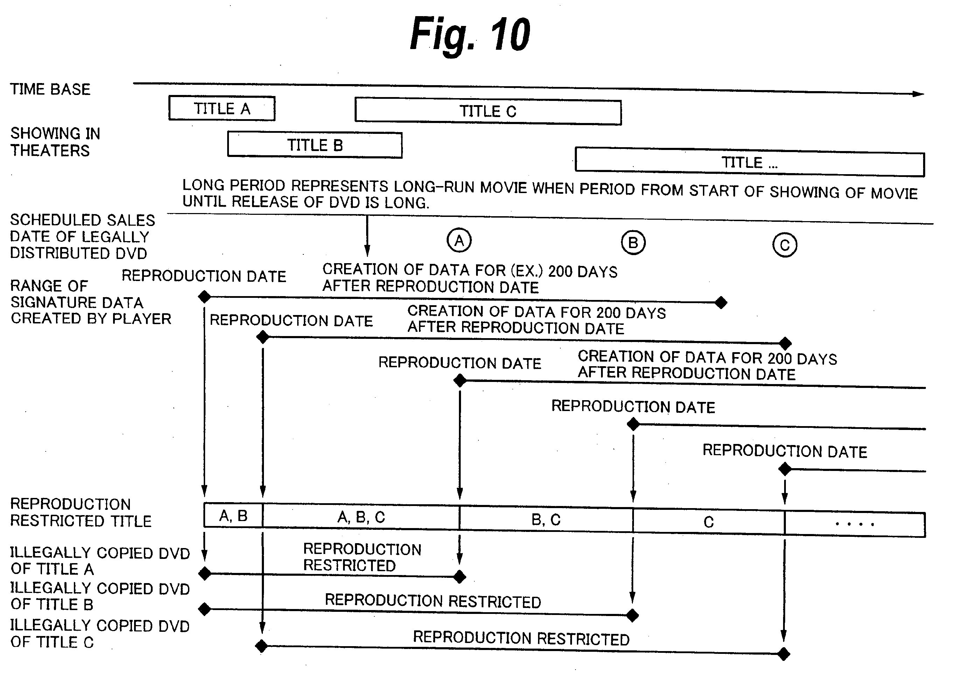

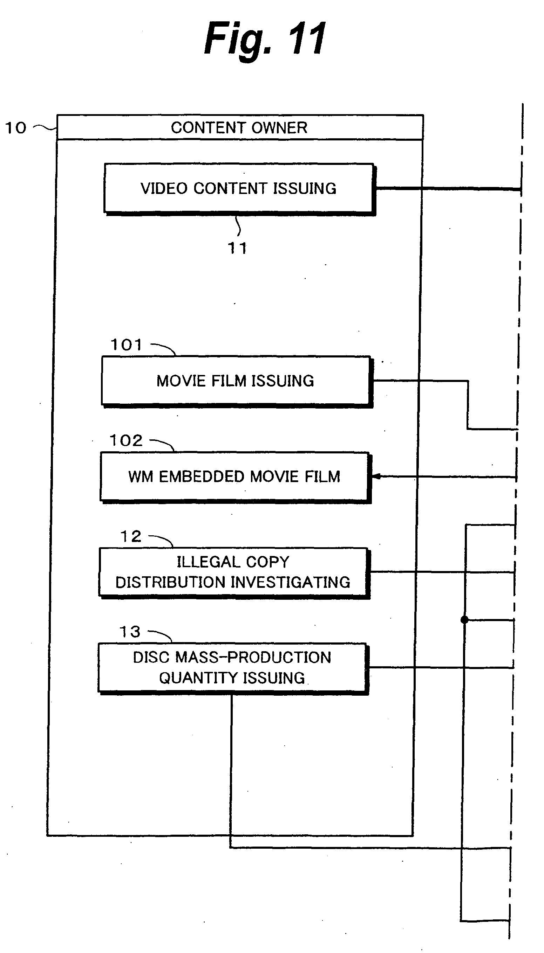

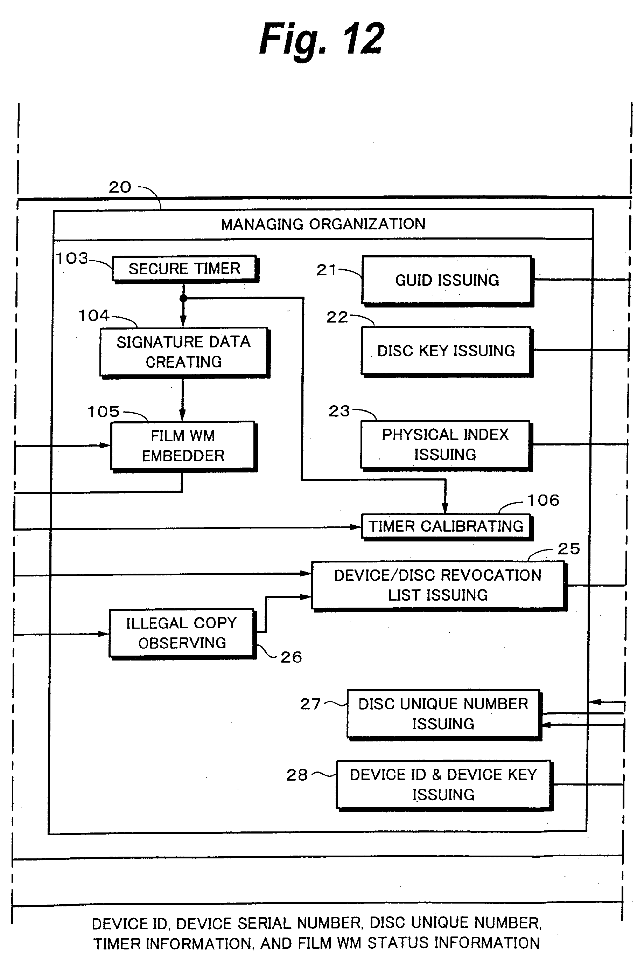

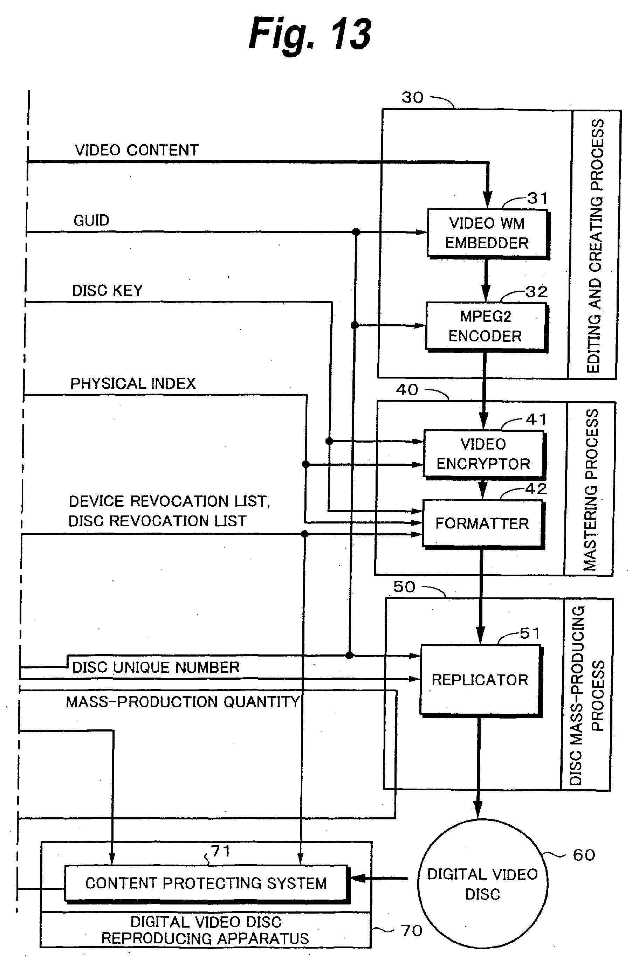

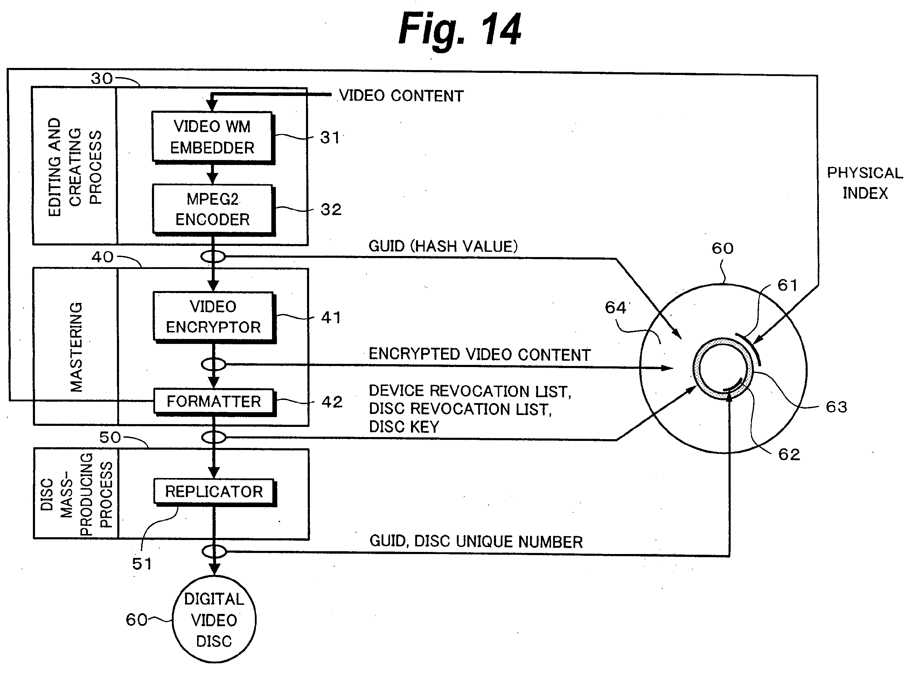

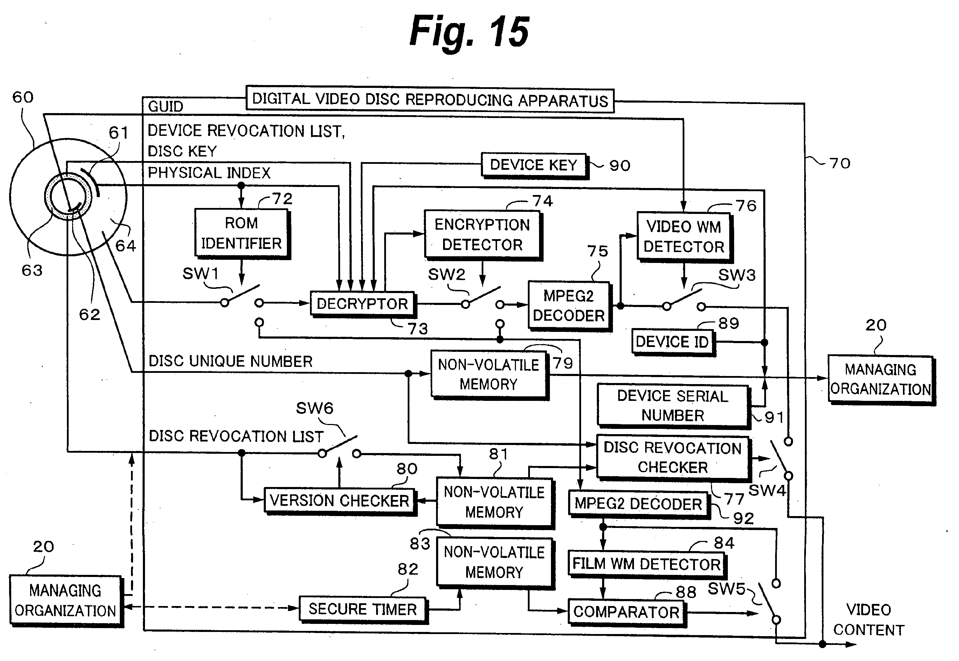

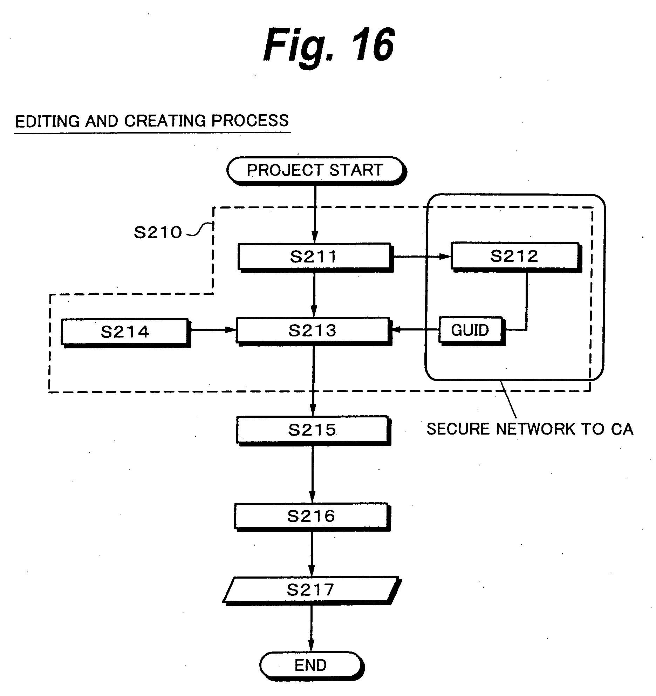

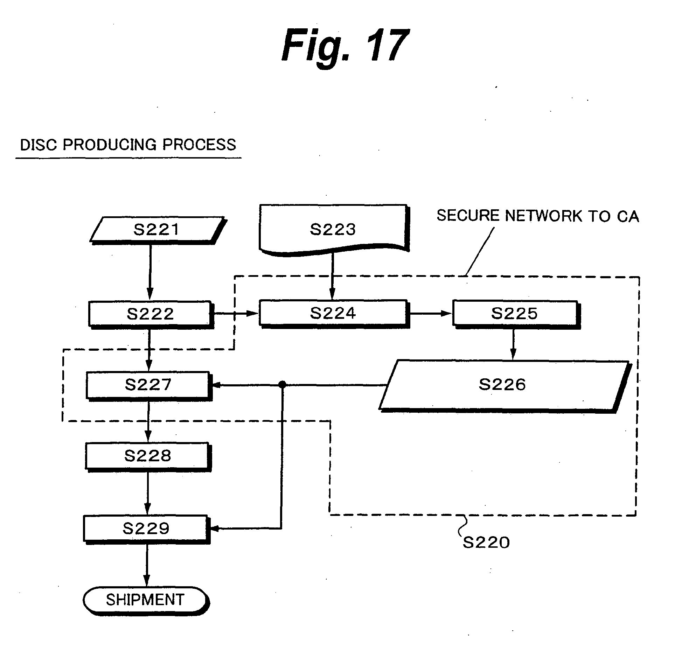

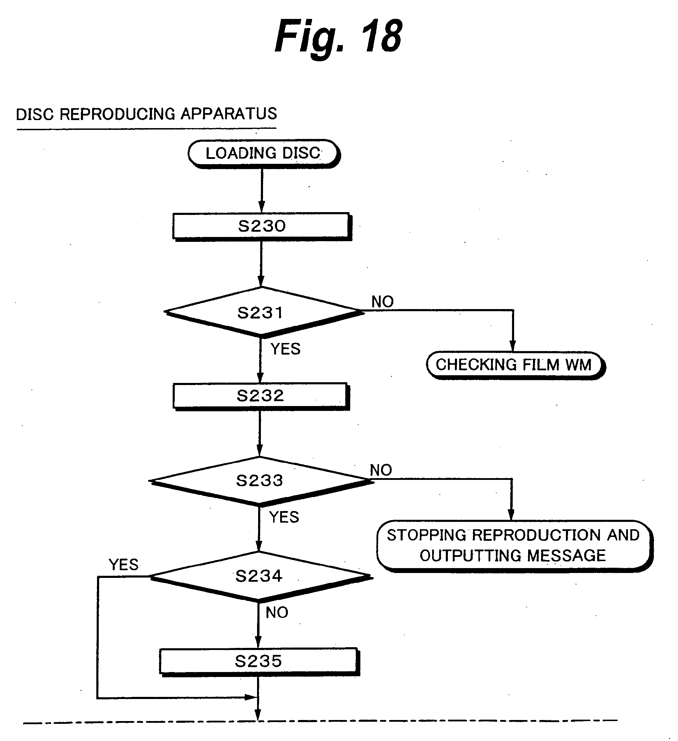

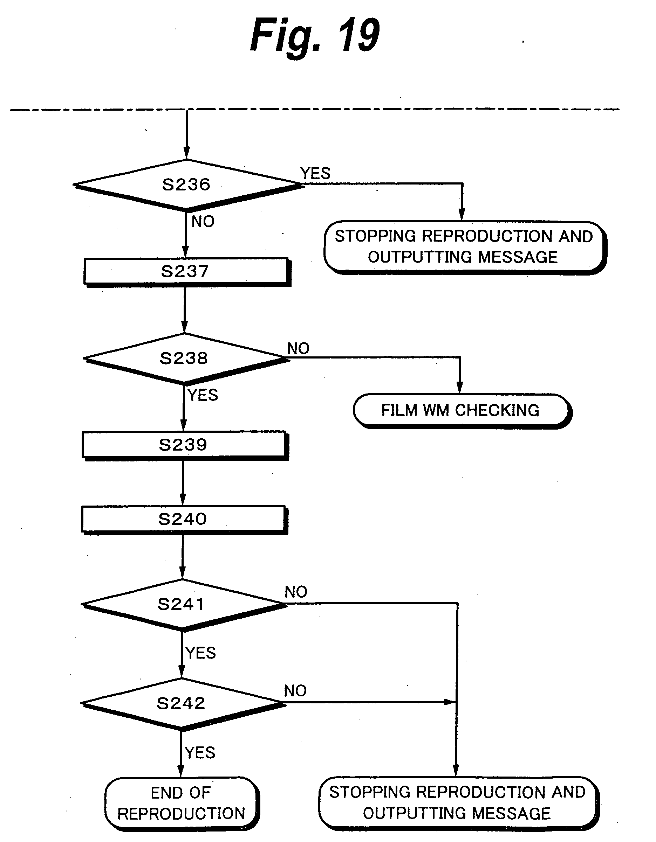

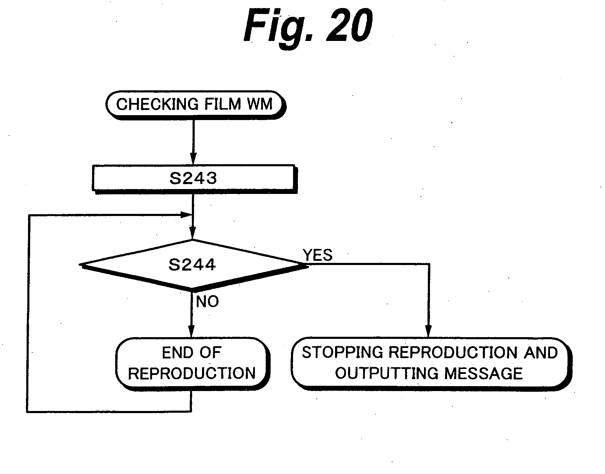

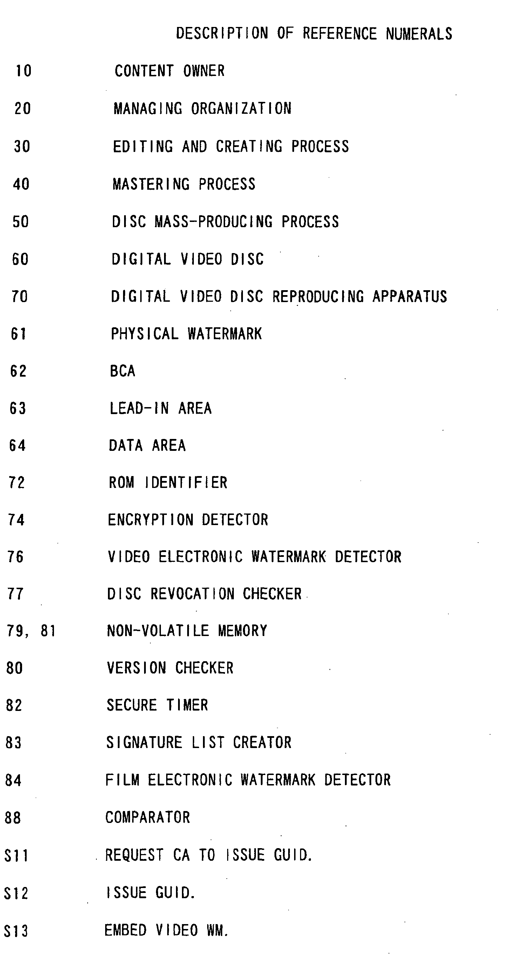

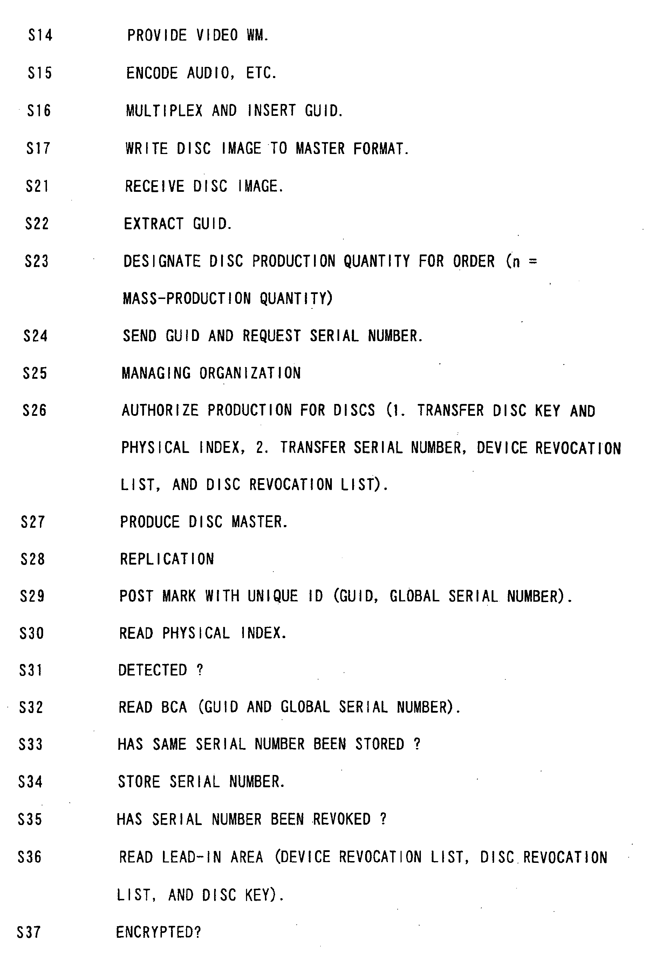

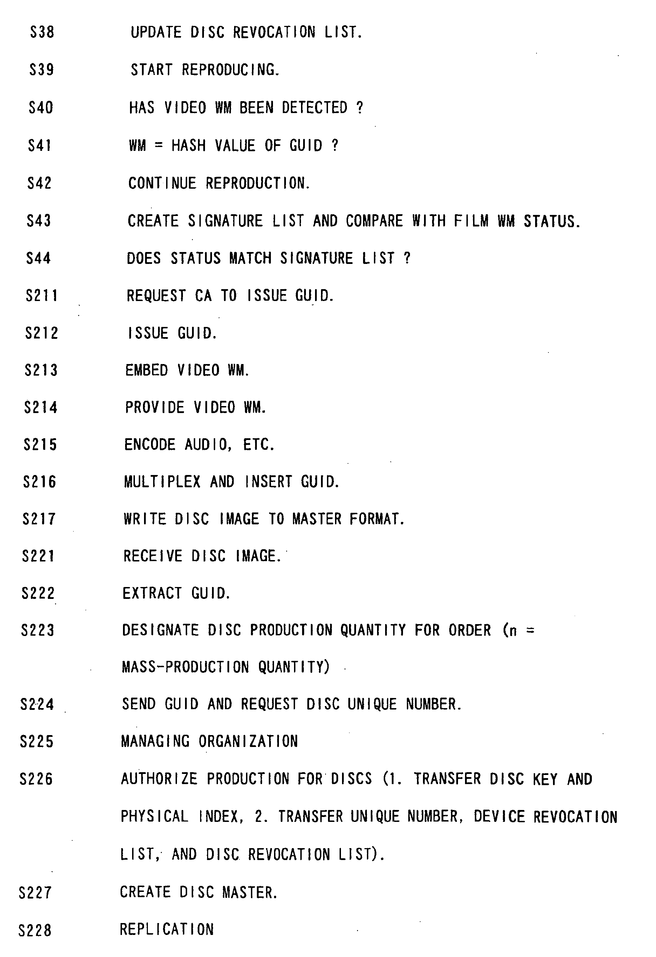

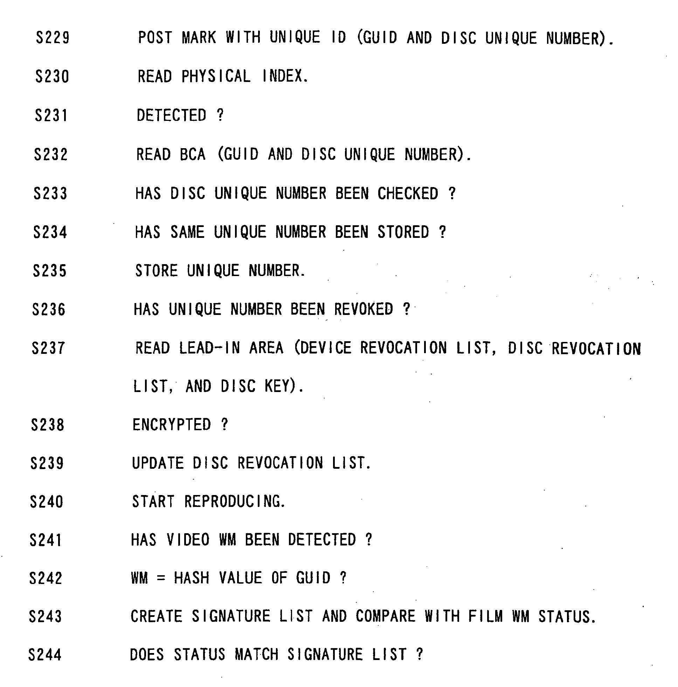

Fig. 1 is a schematic diagram showing an overall system structure (left portion) composed of a creating process, a producing process, and a reproducing apparatus for a digital video disc according to a first embodiment of the present invention. Fig. 2 is a schematic diagram showing the overall system structure (middle portion) composed of the creating process, the producing process, and the reproducing apparatus for the digital video disc according to the first embodiment of the present invention. Fig. 3 is a schematic diagram showing the overall system structure (right portion) composed of the creating process, the producing process, and the reproducing apparatus for the digital video disc according to the first embodiment of the present invention. Fig. 4 is a schematic diagram showing an example of the structure of a data recording area of the digital video disc according to the first embodiment of the present invention. Fig. 5 is a schematic diagram showing an example of the structure of the digital video disc reproducing apparatus that reproduces data from the digital video disc according to the first embodiment of the present invention. Fig. 6 is a schematic diagram showing a flow of an editing and creating process for the digital video disc according to the first embodiment of the present invention. Fig. 7 is a schematic diagram showing a flow of a producing process for the digital video disc according to the first embodiment of the present invention. Fig. 8 is a schematic diagram showing a flow (first half portion) of a process of the digital video disc reproducing apparatus according to the first embodiment of the present invention. Fig. 9 is a schematic diagram showing a flow (second half portion) of the process of the digital video disc reproducing apparatus according to the first embodiment of the present invention. Fig. 10 is a schematic diagram showing an example of the relation of showing periods of movies, sales dates of legally distributed digital video discs, and reproduction restriction periods for illegally copied DVDs according to the first embodiment of the present invention. Fig. 11 is a schematic diagram showing an overall system structure (left portion) composed of a creating process, a producing process, and a reproducing apparatus for a digital video disc according to a second embodiment of the present invention. Fig. 12 is a schematic diagram showing the overall system structure (middle portion) composed of the creating process, the producing process, and the reproducing apparatus for the digital video disc according to the second embodiment of the present invention. Fig. 13 is a schematic diagram showing the overall system structure (right portion) composed of the creating process, the producing process, and the reproducing apparatus for the digital video disc according to the second embodiment of the present invention. Fig. 14 is a schematic diagram showing an example of the structure of a data recording area of a digital video disc according to the second embodiment of the present invention. Fig. 15 is a schematic diagram showing an example of the structure of the digital video disc reproducing apparatus according to the second embodiment of the present invention. Fig. 16 is a schematic diagram showing a flow of an editing and creating process for the digital video disc according to the second embodiment of the present invention. Fig. 17 is a schematic diagram showing a flow of a producing process for the digital video disc according to the second embodiment of the present invention. Fig. 18 is a schematic diagram showing a flow (first half portion) of a process of the digital video disc reproducing apparatus according to the second embodiment of the present invention. Fig. 19 is a schematic diagram showing the flow (second half portion) of the process of the digital video disc reproducing apparatus according to the second embodiment of the present invention. Fig. 20 is a schematic diagram showing a flow of a film electronic watermark checking process according to the second embodiment of the present invention.

### Best Modes for Carrying out the Invention

First of all, with reference to the accompanying drawings, a first embodiment of the present invention will be described. Fig. 1 to Fig. 3 show an example of an overall system structure composed of a creating process, a producing process, and a reproducing apparatus for a digital video disc. Due to a limited drawing space, the structure of the overall system is divided into three portions shown in Fig. 1 to Fig. 3.

A content owner 10 has a copyright of a video content. The content owner 10 is a person or an organization who intends to make a mass-production order of digital video discs so as to get profits from their sales.

A managing organization 20 is a managing organization that manages copyright protection technologies. When the managing organization 20 is requested from the content owner 10, the managing organization 20 provides copyright protection technologies and information thereof to the editing and creating process, the producing process, and the reproducing apparatus that have formally contracted with the managing organization 20, properly manages the technologies and information thereof, and has a function for preventing contents of digital video discs from being illegally copied.

An editing and creating process 30 is an editing and creating process that edits and creates a video content that the content owner 10 has requested. The editing and creating process 30 is disposed in a studio or the like that edits digital video discs. A mastering process 40 is a process that produces an original from which digital video discs are mass-copied. The mastering process 40 is disposed in a disc production factory or the like. A disc mass-producing process 50 is a process that mass-produces digital video discs. The disc mass-producing process 50 is disposed in the disc production factory or the like.

A digital video disc 60 is a mass-produced read-only digital video disc medium. Video and audio signals are mainly recorded on the digital video disc 60. A digital video disc reproducing apparatus 70 is a reproducing apparatus for the digital video disc 60.

A video content issuing portion 11 issues a video content to be recorded on the digital video disc 60. In Fig. 1 to Fig. 3, a video content is sent through the managing organization 20. Alternatively, a video content may be directly sent from the content owner 10 to the editing and creating process 30. An illegal copy distribution investigating portion 12 is an organization that investigates illegally distributed copies. In this example, the investigation of the illegally distributed copies is an action for investigating copied mediums that have been illegally created, produced, and distributed in the market. Currently, a contracted investigation company performs the market investigation. A disc mass-production quantity issuing portion 13 designates the mass-production quantity of the digital video discs 60 of the title that the content owner 10 orders. In Fig. 1 to Fig. 3, the disc mass-production quantity is designated through the managing organization 20. Alternatively, the disc mass-production quantity may be directly designated from the content owner 10 to the editing and creating process 30.

A GUID issuing portion 21 issues a global unique ID (GUID) that is distributed for each title. A GUID is used as title information that represents the title of a video content. For example, a GUID is provided by a copyright managing server authorized by the managing organization 20 through a network. A disc key issuing portion 22 issues a disc key that is a piece of key information necessary for obtaining a content key and that is pre-recorded on the digital video disc 60.

A physical index issuing portion 23 issues a physical index that is pre-recorded on the digital video disc 60 so as to identify a disc medium as a reproduction-only medium. According to the first embodiment, a physical index is used as key information for obtaining a content key. A physical index is recorded on only a reproduction-only medium. A physical index is recorded on other than a channel for a regular data area in such a manner that the physical index cannot be copied. When a physical index is recorded on the digital video disc 60, it can be determined as a disc medium that has been produced through a legal process.

A device/disc revocation list issuing portion 25 issues data that identifies a reproducing apparatus for a video content that has been illegally created and produced or a video content itself. An illegal copy observing portion 26 is an observing organization that detects a copied medium that has been illegally created, produced, and distributed in the market in accordance with data collected from the video content reproducing apparatus.

A global serial number issuing portion 27 issues global serial numbers that are recorded on mass-produced discs in accordance with the disc mass-production quantity issued by the disc mass-production quantity issuing portion 13. The global serial numbers are serial numbers of all titles. Thus, the global serial numbers are uniquely assigned to individual discs. The global serial numbers are used as disc identification numbers that uniquely identify individual discs.

A device ID & device key issuing portion 28 issues a device ID and a device key stored in a non-volatile memory of the digital video disc reproducing apparatus 70. A device ID is used to identify the reproducing apparatus 70 in accordance with a device revocation list pre-recorded on the digital video disc 60. In addition, a device ID is used to obtain a reading method for a device key and a disc key pre-recorded on the digital video disc 60 from the device revocation list pre-recorded on the digital video disc 60.

A video WM embedder 31 is a device that embeds electronic watermark information in a video content. An electronic watermark is a technology for embedding additional information such as content copy generation management information and copyright owner's information in a digital content such as a still picture or a moving picture. An electronic watermark is embedded in a digital content in accordance with for example a spectrum spreading system. An electronic watermark according to the present invention cannot be almost seen. In addition, when an electronic watermark is embedded in a digital content, the electronic watermark does not deteriorate the digital content. In the drawings, an electronic watermark is abbreviated as WM.

The video WM embedder 31 calculates a hash value of a GUID and embeds the hash value as electronic watermark information in a video signal. To cause a value embedded as a video electronic watermark in a video signal and a value recorded to a BCA 62 (that will be described later) to become not correlative, a hash value is used. A hash value is a value obtained using a one-directional function such as a hash function (that is a function of which it is difficult to calculate and obtain two different inputs that become the same output value). A hash value of a GUID is used as a title message necessary for assuring the trueness of the GUID.

An MPEG2 encoder 32 is a video compression encoder. In this example, the MPEG (Moving Picture Experts Group) 2 system is used. However, another compressing system other than the MPEG2 system may be used. The MPEG2 encoder 32 includes an operation for forming a file that can be managed by a file system. A GUID is recorded in a volume descriptor.

A video encryptor 41 is a process that encrypts a video content with a disc key and a content key obtained from a physical index. A formatter 42 is a process that produces an original from which the digital video discs 60 are mass-produced with an encrypted video content, a disc key used to encrypt the video content, a physical index, a disc revocation list that identifies an illegally copied disc, and a device revocation list that identifies a reproducing apparatus that has been illegally produced or modified. A replicater 51 is a producing process that mass-produces digital video discs 60 from an original.

A content protecting system 71 is a mechanism that controls a copyright protecting technology. The content protecting system 71 has a mechanism that stores a device ID, a device key, a disc revocation list, and a global serial number of the digital video disc 60 from which a content is reproduced, a mechanism that calibrates a built-in secure timer, and a scheme that reports the global serial number of the medium from which the content is reproduced and a device ID of the digital video disc reproducing apparatus 70 to the managing organization 20 in a predetermined condition. In addition, the content protecting system 71 has a scheme that calibrates the built-in secure timer and reports the status of a detected electronic watermark of a film to the managing organization 20 when the content protecting system 71 is connected to the managing organization 20. In addition, the content protecting system 71 has a mechanism that references a device revocation list, a disc revocation list, and a signature list, detects an illegally reproducing state in accordance therewith, and restricts the reproducing operation.

A movie film issuing portion 101 represents a new movie shown in a movie theater. To prevent illegal actions of which for example a movie shown in a movie theater is photographed by a digital video camera or the like or a video signal obtained by telecine conversion is mass-produced as digital video discs 60 from being performed, with means for embedding signature data in a film content to be protected using an electronic watermark technology and for causing a reproducing apparatus to reproduce the signature data, the reproducing apparatus can identify an illegally distributed content.

A WM embedded movie film 102 is a movie film that is distributed from a movie company to a movie theater. Although a movie content is normally distributed as a film, compressed video data may be distributed to a digital cinema. Signature data designated by the copyright protection technology managing organization is embedded in video data by the electronic watermark technology.

A secure timer 103 is a clock whose time information cannot be easily falsified. A signature data creating portion 104 is a device that creates signature data, which is embedded as electronic watermark information in a movie film and which identifies the movie film, in accordance with the time information of the secure timer 103. A film WM embedder 105 is a device that embeds electronic watermark information in a movie film. Electronic watermark information may be embedded in a film master. Alternatively, electronic watermark information may be embedded when a movie content is copied from a film master. A timer calibrating portion 106 has a scheme that calibrates the time of the built-in secure timer of the reproducing apparatus.

Fig. 4 shows an example of the structure of a data recording area of the digital video disc 60. A physical index recording area 61 is an area for a physical index. A physical index is multiplex-recorded in such a manner that it does not affect main data that is read.

For example, the widths of pits and marks as main data are partly varied with a modulation signal. The varied portion can be multiplexed as sub data with the main data. A method of which pits, marks, and so forth as main data are formed at positions deviated from the center positions of tracks and the deviated positions are multiplexed as sub data with the main data has been proposed. The sub data of the recording method, namely the widths and deviations of pits, marks, and so forth as the main data, can be read by an optical pickup of the reproducing apparatus. In addition, the sub data does not affect the main data that is output from a binary circuit and so forth. The multiplex-recorded identification information can be used to prevent data from being illegally copied.

In those recording methods, even if main data is read from all the disc area and copied, since the physical index of the multiplexed portion is not copied, this recording method is effective for a whole copying operation (bit-by-bit copying operation).

A burst cutting area (hereinafter sometimes referred to as BCA) 62 is an area for a GUID that identifies a title and a global serial number that is unique to each disc. After data is recorded on a disc medium, the BCA is recorded on the disc medium. When the disc medium is a disc-shaped optical recording medium, pulse laser light is radiated on a reflection film made of aluminum or the like formed inside the disc. As a result, a stripe (bar code) is formed in the radius direction. The stripe is formed on the innermost periphery in accordance with the record information. The BCA is read by the optical pickup of the reproducing apparatus so as to obtain data from the BCA. Even if the data area of a disc is copied to another recording medium using a computer or the like, data recorded in the BCA is not copied. When ID data of a recording medium and key data for encrypted content recorded in the data area are recorded in the BCA, a content can be prevented from being reproduced from an illegally copied recording medium.

The device revocation list, the disc revocation list, and the disc key are recorded in other than an area for a video content for example a lead-in area 63 in such a manner that they cannot be rewritten.

A data area 64 is a data area for an encrypted video content in which a hash value of a GUID has been embedded as electronic watermark information.

Fig. 5 shows an example of the structure of the digital video disc reproducing apparatus 70 that reproduces data from the digital video disc 60. A ROM identifier 72 determines whether or not a disc loaded into the digital video disc reproducing apparatus 70 is a read-only digital video disc 60. When the determined result represents that the loaded disc is a digital video disc 60, a switch SW1 is turned on. Otherwise, the switch SW1 is turned off.

A decryptor 73 decrypts an encrypted video content. An encryption detector 74 determines whether or not the digital video disc reproducing apparatus 70 has been revoked and whether or not a video content recorded on the digital video disc 60 has been encrypted. When the determined results represent that the reproducing apparatus has not been revoked and that the video content has been encrypted, a switch SW2 is turned on. Otherwise, the switch SW2 is turned off.

An MPEG2 decoder 75 decompresses a compressed video signal and obtains a base band video signal. A video WM detector 76 detects video electronic watermark information from the video content. After the electronic watermark information has been detected, the video WM detector 76 calculates a hash value of the GUID recorded in the BCA 62 and compares the hash value and the electronic watermark information. When they do not match, a switch SW3 is turned off. When they match or when the electronic watermark information has not been detected, the switch SW3 is turned on.

A disc revocation checker 77 compares a hash value of a global serial number recorded in the BCA 62 and a value registered in a disc revocation list stored in the non-volatile memory of the reproducing apparatus and determines whether or not the hash value has been registered in the disc revocation list. When they match, the disc revocation checker 77 determines that the digital video disc 60 should be revoked. At that point, a switch SW4 is turned off. When they do not match, the switch SW4 is turned on. Alternatively, the disc revocation checker 77 may compare not only the hash value of the global serial number but other information such as the GUID with the disc revocation list. As a result, the probability of which a disc is uniquely identified becomes high. Thus, the risk of which a legally distributed disc is mistakenly revoked becomes low.

A hash function 78 is a hash function with which a hash value of a global serial number is calculated. The hash function 78 is the same as the function with which a hash value of a global serial number of a disc to be revoked is registered. A hash value of a global serial number is used as an identification message necessary for assuring the trueness thereof. When data is transferred from the digital video disc reproducing apparatus 70 to the managing organization 20, a hash value of a global serial number is used. Thus, since a title that the user has watched cannot be identified, the privacy of the user can be protected.

A non-volatile memory 79 is a non-volatile memory that stores a hash value of a global serial number as a record of a medium from which the reproducing apparatus has reproduced data. When the managing organization 20 is connected to the digital video disc reproducing apparatus 70 through a network, the record data for the reproduction medium stored in the non-volatile memory 79 is transferred to the managing organization 20 along with a device ID 89 and a device serial number 91. After the record data has been transferred to the managing organization 20, the record data is erased from the non-volatile memory 79 so as to secure a blank space. When the managing organization 20 and the digital video disc reproducing apparatus 70 are connected through a network, it is assumed that an encryption communication such as SSL (Secure Socket Layer) authentication or VPN (Virtual Private Network) based on IPsec (IP security protocol) encryption is performed.

When the disc revocation list recorded on the digital video disc 60 is stored in a non-volatile memory 81, a version checker 80 compares the version of the disc revocation list that has been stored and the version of the disc revocation list recorded on the digital video disc 60. When the version of the data recorded on the digital video disc 60 is newer than the version of the data that has been stored, a switch SW6 is turned on so as to update data of the disc revocation list stored in the non-volatile memory 81.

A non-volatile memory 81 is a non-volatile memory that stores a disc revocation list. The disc revocation list may be transferred from the managing organization 20 when it is connected to the digital video disc reproducing apparatus 70 through a network. At that point, in the same process as the disc revocation list that is updated with the medium, data stored in the non-volatile memory 81 is updated.

A secure timer 82 is a timer that is disposed in the digital video disc reproducing apparatus 70 and that cannot be easily falsified. A signature list is created in accordance with time information that is output from the secure timer 82. When the managing organization 20 is connected to the digital video disc reproducing apparatus 70 through a network, the time information of the timer 82 may be synchronized with the secure timer 103 of the managing organization 20 so as to calibrate the time information of the secure timer 82.

A signature list creator 83 creates signature data of a plurality of movie films, for example, 100 titles, that are earlier than time information that is output from the secure timer 82 and creates a signature list. The 100 titles are for example new movies that are currently shown in movie theaters, not mass-produced and sold as digital video discs 60. When the reproducing apparatus reproduces a movie content listed in the signature list, it is assumed that the content has been illegally distributed.

A film WM detector 84 is a process that detects the statues of a film electronic watermark embedded in a video content that is being reproduced as electronic watermark information.

A comparator 88 is a process that compares the status of the film electronic watermark detected by the film WM detector 84 with the signature list that is stored in the signature list creator 83 and that identifies a content that has been illegally distributed. When the film WM detector 84 has not detected a film electronic watermark, a switch SW5 is turned on. When the film WM detector 84 has detected a film electronic watermark and the status represents that it has been registered in the signature list stored in the signature list creator 83, it is assumed that the reproduced content is an illegally distributed content. As that point, the switch SW5 is turned off so as to stop the reproducing operation for the content. Alternatively, a message that represents that an illegally distributed content is being reproduced is superimposed on the reproduction screen so as to inform the user thereof.

The device ID 89 is identification data for the digital video disc reproducing apparatus 70. The device ID 89 is unique to each manufacturer of the reproducing apparatus or each model thereof.

A device key 90 is combined with data calculated from the device ID 89 and the disc revocation list so as to obtain an encrypted secret disc key recorded on the digital video disc 60.

A device serial number 91 is a production serial number that uniquely identifies the digital video disc reproducing apparatus 70 and that is designated by the manufacturer thereof.

The switch SW1 is a switch that controls the reproduction for a video content in accordance with the determined result of the ROM identifier 72. The switch SW2 is a switch that controls the reproduction for a video content in accordance with the determined result of the encryption detector 74. The switch SW3 is a switch that controls the reproduction for a video content in accordance with the determined result of the video WM detector 76. The switch SW4 is a switch that controls the reproduction for a video content in accordance with the determined result of the disc revocation checker 77. The switch SW5 is a switch that controls the reproduction for a video content in accordance with the determined result of the comparator 88. The switch SW6 is a switch that controls the storage of the disc revocation list in accordance with the determined result of the version checker 80.

### <1. Description of editing and creating process>

Fig. 6 shows a flow of an editing and creating process for the digital video disc 60. Next, with reference to the block diagrams showing the overall system structure of Fig. 1 to Fig. 3, the editing and creating process for the digital video disc 60 shown in Fig. 6 will be described.

When a video content with which a digital video disc is created is received from the content owner 10, an editing and creating project starts. When the editing and creating project for creating the digital video disc is started, the editing and creating process 30 requests the managing organization 20 to issue a GUID (at step S11). In Fig. 6, CA represents the managing organization 20.

When the managing organization 20 has been requested to issue a GUID, the managing organization 20 issues a GUID for each title (at step S12). When the editing and creating process 30 has received a GUID, at step S14, the editing and creating process 30 embeds a hash value of the GUID in the video content (at step S13).

When the video WM embedder 31 that has received the GUID under contract with the managing organization 20 calculates a hash value of the GUID, the video WM embedder 31 embeds the hash value as electronic watermark information in a video signal of the video content (at step S14).

At step S10, namely in step S11 to step S14, it is assumed that the editing and creating process 30 and the managing organization 20 structure VPN using for example SSL or IPsec technology so that data can be transmitted and received through a secure network connection.

Along with the video signal in which the hash value has been embedded as electronic watermark information, an audio signal of the video content, a sub title such as superimposed text, a menu for video contents, and data and a program necessary for accomplishing an interactive function are encoded (at step S15).

Data of each file are multiplexed. The GUID is recorded in a volume descriptor that is file system management information (at step S16). To perform the disc producing process, an HD-DVD disc image is written to a master format (at step S17).

### <2. Description of disc producing process>

Fig. 7 shows a flow of a producing process for the digital video disc 60. Next, with reference to the block diagrams showing the overall system structure of Fig. 1 to Fig. 3 and the schematic diagram showing the relation of the disc medium of Fig. 4, the flow of the producing process for the digital video disc 60 shown in Fig. 7 will be described.

An HD-DVD disc image is received from the editing and creating process 30 (at step S21). The GUID is read from the volume descriptor. The obtained GUID is transferred from the disc production factory to the managing organization 20 (at step S22).

When the content owner 10 has provided the video content to be edited and created to the editing and creating process 30, the content owner 10 has also designated the disc mass-production quantity for an order to the disc production factory (at step S23).

When the disc production factory has received the order for the disc mass-production from the content owner 10, the disc production factory transfers the GUID and the ordered disc quantity to the managing organization 20. The disc production factory requests the managing organization 20 to issue global serial numbers for the discs to be produced (at step S24).

The managing organization 20 identifies the title of the video content in accordance with the GUID received from the disc production factory. In addition, the managing organization 20 accurately calculates unused global serial numbers for the disc mediums to be produced in accordance with the received ordered disc quantity (at step S25).

The managing organization 20 authorizes the disc production factory to produce discs, namely transfers a disc key necessary for encrypting the HD-DVD disc image, a set of global serial numbers, a device revocation list, and a disc revocation list to the disc production factory (at step S26). The device revocation list is data with which the reproducing operation of an illegally produced disc reproducing apparatus is restricted for data of a legally distributed disc medium. On the other hand, the disc revocation list is data with which the reproducing operation of a legally produced disc reproducing apparatus is restricted for data of an illegally produced disc medium.

The disc production factory combines those pieces of data received from the managing organization 20 with the HD-DVD disc image received from the editing and creating process 30, encrypts the HD-DVD disc image using a licensed encrypting technology under contract with the managing organization 20, and produces a disc master (original) (at step S27).

At step S20, namely in step S24 to step S27, it is assumed that the disc production factory and the managing organization 20 structure VPN using for example SSL or IPsec technology so that data can be transmitted and received through a secure network connection.

With the disc master (original), disc mediums are mass-produced (at step S28). A BCA is burnt on each disc medium that has been produced. In the BCA, a GUID that identifies a title and a global serial number that is unique to each medium are recorded (at step S29).

### <3. Description of disc reproducing apparatus>

Fig. 8 and Fig. 9 show a flow of a process of the reproducing apparatus for the digital video disc 60. Due to a limited drawing space, the flow of the process is divided into two portions shown in Fig. 8 and Fig. 9. Next, with reference to the block diagram showing the structure of the digital video disc reproducing apparatus 70 shown in Fig. 5, the operation of the reproducing apparatus into which a disc medium has been loaded will be described.

First of all, the reproducing apparatus reads the physical index recording area 61 from the loaded disc medium (at step S30). When the manufacturers of the reproducing apparatus and parts thereof formally contract with the managing organization 20, it will provide a reading method for the physical index recording area 61 to the manufacturers.

After the reproducing apparatus has read the physical index recording area 61, the reproducing apparatus determines whether or not it can correctly detect the physical index (at step S31). When the reproducing apparatus has not correctly detected the physical index, the reproducing apparatus stops the reproducing operation and informs the user that the reproducing apparatus has stopped the reproducing operation through the user interface. In the example, the reproducing apparatus reproduces data from only a reproduction-only disc medium. However, when the reproducing apparatus can reproduce data from a recordable disc medium that does not have a physical index, it is expected that the reproducing apparatus performs a process for reproducing data from the recordable disc medium.

When the reproducing apparatus has correctly detected the physical index, the reproducing apparatus reads data from the BCA and obtains the GUID and the global serial number therefrom (at step S32). The reproducing apparatus calculates a hash value of the global serial number and searches the reproduction disc medium list stored in the non-volatile memory 79 for the hash value (at step S33).

When the reproduction disc medium list has the hash value, the flow advances to step S35. When the reproduction disc medium list does not have the hash value, the reproducing apparatus stores the hash value to the non-volatile memory 79 (at step S34). When the digital video disc reproducing apparatus 70 and the managing organization 20 are securely connected through a network, the list is transferred from the digital video disc reproducing apparatus 70 to the managing organization 20. After the list has been transferred, the list is erased from the non-volatile memory 79 depending on the blank space of the memory.

The disc revocation list stored in the non-volatile memory 81 is searched for the hash value of the global serial number (at step S35). When the disc revocation list has the hash value, the reproducing apparatus determines that the disc medium should be revoked, stops the reproducing operation, and informs the user that the reproducing apparatus has stopped the reproducing operation through the user interface.

When the disc revocation list does not have the hash value, the reproducing apparatus reads the device revocation list, the disc revocation list, and the encrypted disc key from the lead-in area (at step S36). They are required to decrypt an encrypted video content. When the manufacturers of the reproducing apparatus and parts thereof formally contract with the managing organization 20, it will provide the decrypting technology for the encrypted video content to the manufacturers.

The reproducing apparatus determines whether or not it has correctly read the device revocation list and the disc revocation list and determines whether or not it should not been revoked in accordance with the device revocation list and has correctly read the encrypted disc key (at step S37). When the reproducing apparatus has not correctly read the device revocation list and the disc revocation list or has determined that it should be revoked in accordance with the device revocation list and has not correctly read the encrypted disc key, namely the determined result represents that the video content has not been correctly encrypted and recorded, the reproducing apparatus stops the reproducing operation and informs the user that the reproducing apparatus has stopped the reproducing operation through the user interface.

When the reproducing apparatus has correctly read the device revocation list, the disc revocation list, and the encrypted disc key and has determined that it should not be revoked in accordance with the device revocation list, the reproducing apparatus updates the disc revocation list (at step S38). The list has version information. When the reproducing apparatus has obtained a disc revocation list newer than the disc revocation list stored in the non-volatile memory 81, the reproducing apparatus updates the list stored in the non-volatile memory 81. The memory may have a FIFO (First-In First-Out) structure that stores a plurality of versions of the disc revocation lists and erase them in the order of an older version thereof. The reproducing apparatus starts the reproducing operation for the decrypted video content read from the data area (at step S39).

After the reproducing apparatus starts reproducing the data from the medium, the reproducing apparatus detects a video electronic watermark from the video signal (at step S40). When the reproducing apparatus has not detected the video electronic watermark in a predetermined time period or in a predetermined stream amount, the reproducing apparatus determines that the disc medium should have a video content that has been illegally edited and created. At that point, the reproducing apparatus stops the reproducing operation and informs the user that the reproducing apparatus has stopped the reproducing operation through the user interface. When the manufacturers of the reproducing apparatus and parts thereof formally contract with the managing organization 20, it will provide the technology for detecting the video electronic watermark to the manufacturers.

When the reproducing apparatus has detected the video electronic watermark in the predetermined time period or in the predetermined stream amount, the reproducing apparatus determines whether or not the electronic watermark information has the same value as the hash value of the GUID (at step S41). When they do not match, the reproducing apparatus determines that the disc medium should have a video content that has been illegally edited and created or the disc medium has been illegally produced, stops the reproducing operation, and informs the user that the reproducing apparatus has stopped the reproducing operation through the user interface. When they match, the reproducing apparatus continues the reproducing operation (at step S42).

While the reproducing apparatus is reproducing the video content, the signature list creator 83 creates a signature list (at step S43). The signature list is a database that has a plurality of entries of signature data that identify movies that are currently shown and will be shown in movie theaters so as to prevent the content owner 10 from loosing sales profits from movie theaters for new movies and sales profits of legally distributed disc mediums against sales of disc mediums that are illegally produced before the content owner 10 authorizes movie theaters to show new movies. When the manufacturers of the reproducing apparatus and parts thereof formally contract with the managing organization 20, it will provide the method for creating the signature list to the manufacturers.

The film WM detector 84 detects a film electronic watermark. When the film WM detector 84 has detected a film electronic watermark, the film WM detector 84 determines whether or not the signature list stored in the signature list creator 83 has registered signature data corresponding to the video electronic watermark (at step S44). When the signature data has been registered, the reproducing apparatus determines that the reproduction disc medium should have a video content of which a movie shown in a movie theater has been illegally photographed as a source and that has been edited, created, and produced with the source, stops the reproducing operation, and informs the user that the reproducing apparatus has stopped the reproducing operation through the user interface. When the signature data has not been registered, the reproducing apparatus determines that the disc medium should have been edited, created, and produced under a formal contract and can securely perform the reproducing operation. When the manufacturers of the reproducing apparatus and parts thereof formally contract with the managing organization 20, it will provide the technology for detecting the film electronic watermark to the manufacturers.

According to the first embodiment of the present invention, a GUID and a hash value thereof are recorded in two types of recording methods on the digital video disc 60. In other words, a GUID is recorded in the BCA of the disc medium. A hash value of a GUID is embedded as electronic watermark information in a video content that will be burnt on a digital video disc. The digital video disc reproducing apparatus 70 reads a GUID from the BCA and compares a hash value of the GUID that has been read from the BCA and electronic watermark information embedded in the video content. When they match, the digital video disc reproducing apparatus 70 performs the reproducing operation. Thus, the digital video disc reproducing apparatus 70 can determine that the content that has been edited by the editing and creating process 30 authorized by the managing organization 20 has been recorded on the digital video disc 60 produced by the disc producing process (the mastering process 40 and the disc mass-producing process 50).

Thus, the digital video disc reproducing apparatus 70 can identify a disc medium of which an illegally obtained video signal has been edited by an illegally editing and creating process, produced by a disc production factory, and then distributed. The digital video disc reproducing apparatus 70 can restrict the reproduction for data of such an illegally distributed disc medium.

Regularly, CCI (Copy Control Information) is embedded as electronic watermark information in a video signal. However, when the electronic watermark information is "attacked", it cannot be detected and becomes invalidated. According to the first embodiment of the present invention, when information of a GUID embedded as electronic watermark information is correctly detected and the detected GUID information matches a GUID recorded in the BCA of the disc medium, the reproducing apparatus can perform the reproducing operation for the video signal. Thus, it is not useful to attack electronic watermark information so that it cannot be detected. As a result, it is not necessary to take countermeasures against an attack to the electronic watermark technology. Thus, since the applied electronic watermark technology becomes simple, it will contribute to the cost reduction thereof.

In addition, according to the first embodiment of the present invention, the mastering process 40 records a physical index issued by the managing organization 20 to the digital video disc 60. The physical index is multiplex-recorded in such a manner that it does not affect main data that is read from a reproduction-only disc medium. The digital video disc reproducing apparatus 70 performs the reproducing operation when the physical index is detected from the disc. As a result, the digital video disc reproducing apparatus 70 can determine whether or not the loaded disc is a reproduction-only disc medium that has been produced by a disc production factory authorized by the managing organization 20.

In addition, a video content recorded on the digital video disc 60 has been encrypted. Thus, the digital video disc reproducing apparatus 70 can determine whether or not the loaded disc medium is a disc medium that has been illegally produced and distributed by a disc production factory with an illegally obtained video signal by two means that are the ROM identifier 72 that detects a physical index for a reproduction-only disc medium and the encryption detector 74 that detects an encrypted video content. Thus, depending on the detected results of the ROM identifier 72 and the encryption detector 74, the digital video disc reproducing apparatus 70 can restrict the reproduction for the video content.

According to the first embodiment of the present invention, when discs whose production quantity exceeds a designated production quantity are tried to be produced, global serial numbers will be overlapped. The overlapped global serial numbers can be observed and detected by a managing server or the like of the managing organization 20 connected to the digital video disc reproducing apparatus 70 through a network. Thus, a disc production factory authorized by the managing organization 20 can be managed so that the factory can not produce discs whose production quantity exceeds the formally ordered quantity. In addition, even if a hash value of a global serial number is leaked out on the network, it is impossible to identify a title with the hash value. As a result, the privacy of the user can be protected.

In addition, according to the first embodiment of the present invention, the film WM embedder 105 embeds signature data as an electronic watermark in a film content shown in a movie theater. When the digital video disc reproducing apparatus 70 reproduces data from a disc, the signature list creator 83 creates a signature list in accordance with time information. The film WM detector 84 reads the electronic watermark information from the film content. The comparator 88 compares the signature list with the signature data. When they match, the digital video disc reproducing apparatus 70 stops the reproducing operation. Thus, the digital video disc reproducing apparatus 70 can determine whether or not the disc medium is an illegally distributed disc medium produced with a video signal illegally obtained from a movie shown in a movie theater. The digital video disc reproducing apparatus 70 can restrict the reproduction for a video content from the disc medium.

Next, with reference to the accompanying drawings, a reproduction restriction using a signature list and signature data according to the first embodiment will be described. Fig. 10 shows an example of the relation of showing periods of movies as film contents, sales dates of legally distributed digital video discs, and reproduction restriction periods of illegally copied DVDs. As shown in Fig. 10, it is assumed that new movies having titles A, B, C, and so forth will be shown in movie theaters and legally distributed digital video discs will be sold on their sales dates in the order of the titles A, B, C, and so forth.

"Reproduction date" shown in Fig. 10 represents the date on which a video content is reproduced from a DVD by the digital video disc reproducing apparatus 70 according to the first embodiment of the present invention. For example, until a legally distributed digital video disc is released, the reproduction for a video content from an illegally copied DVD is restricted. As shown in Fig. 10, it is assumed that a range for which signature data is created by the digital video disc reproducing apparatus 70 is for example 200 days after the reproduction date.

In this case, when a video content is reproduced from a DVD first time, since the range of 200 days after the reproduction date includes the sales dates of the titles A and B, they are reproduction restricted titles. As a result, the digital video disc reproducing apparatus 70 creates signature data that designates the titles A and B. Likewise, on the second reproduction date, the titles A, B, and C are reproduction restricted titles. Thus, the digital video disc reproducing apparatus 70 creates signature data that designates the titles A, B, and C.

On the third reproduction date, since legally distributed DVDs of the title A have been sold, the titles B and C are reproduction restricted titles. Thus, the digital video disc reproducing apparatus 70 creates signature data that designates the titles B and C. Likewise, on the fourth reproduction date, the title C is a reproduction restricted title. Thus, the digital video disc reproducing apparatus 70 creates signature data that designates the title C. Likewise, on the fifth or later reproduction date, a reproduction restricted title is designated. Thus, the digital video disc reproducing apparatus 70 creates signature data that designates a reproduction restricted title.

A signature list having a plurality of entries of signature data and signature data embedded as an electronic watermark reproduced from the DVD are compared. When they match, the digital video disc reproducing apparatus 70 restricts the reproduction for a video content from the disc.

According to the first embodiment, it is assumed that a disc unique number is a global serial number assigned as a serial number. Alternatively, a unique disc number may be randomly assigned. According to a second embodiment of the present invention, a unique disc number is assigned as a random number.

Next, with reference to the accompanying drawings, the second embodiment of the present invention will be described.

Fig. 11 to Fig. 13 show an example of an overall system structure composed of a creating process, a producing process, and a reproducing apparatus for a digital video disc. Due to a limited drawing space, the structure of the overall system is divided into three portions shown in Fig. 11 to Fig. 13.

A content owner 10 has a copyright of a video content. The content owner 10 is a person or an organization who intends to make a mass-production order of digital video discs so as to get profits from their sales.

A managing organization 20 is a managing organization that manages copyright protection technologies. When the managing organization 20 is requested from the content owner 10, the managing organization 20 provides copyright protection technologies and information thereof to the editing and creating process, the producing process, and the reproducing apparatus that have formally contracted with the managing organization 20, properly manages the technologies and information thereof, and has a function for preventing contents of digital video discs from being illegally copied.

An editing and creating process 30 is an editing and creating process that edits and creates a video content that the content owner 10 has requested. The editing and creating process 30 is disposed in a studio or the like that edits digital video discs. A mastering process 40 is a process that produces an original from which digital video discs are mass-copied. The mastering process 40 is disposed in a disc production factory or the like. A disc mass-producing process 50 is a process that mass-produces digital video discs. The disc mass-producing process 50 is disposed in the disc production factory or the like.

A digital video disc 60 is a mass-produced read-only digital video disc medium. Video and audio signals are mainly recorded on the digital video disc 60. A digital video disc reproducing apparatus 70 is a reproducing apparatus for the digital video disc 60.

A video content issuing portion 11 issues a video content to be recorded on the digital video disc 60. In Fig. 11 to Fig. 13, a video content is directly sent from the content owner 10 to the editing and creating process 30. Alternatively, a video content may be sent through the managing organization 20. An illegal copy distribution investigating portion 12 is an organization that investigates illegally distributed copies. In this example, the investigation of the illegally distributed copies is an action for investigating copied mediums that have been illegally created, produced, and distributed in the market. Currently, a contracted investigation company performs the market investigation. A disc mass-production quantity issuing portion 13 designates the mass-production quantity of the digital video discs 60 of the title that the content owner 10 orders. In Fig. 11 to Fig. 13, the disc mass-production quantity is directly designated from the content owner 10 to the editing and creating process 30. Alternatively, the disc mass-production quantity may be designated through the managing organization 20.

A GUID issuing portion 21 issues a global unique ID (GUID) that is distributed for each title. A GUID is used as title information that represents the title of a video content. For example, a GUID is provided by a copyright managing server authorized by the managing organization 20 through a network. A disc key issuing portion 22 issues a disc key that is a piece of key information necessary for obtaining a content key and that is pre-recorded on the digital video disc 60.

A physical index issuing portion 23 issues a physical index that is pre-recorded on the digital video disc 60 so as to identify a disc medium as a reproduction-only medium. According to the second embodiment, a physical index is used as key information for obtaining a content key. A physical index is recorded on only a reproduction-only medium. A physical index is recorded on other than a channel for a regular data area in such a manner that the physical index cannot be copied. When a physical index is recorded on the digital video disc 60, it can be determined as a disc medium that has been produced through a legal process.

A device/disc revocation list issuing portion 25 issues data that identifies a reproducing apparatus for video content that has been illegally created and produced or a video content itself. An illegal copy observing portion 26 is an observing organization that detects a copied medium that has been illegally created, produced, and distributed in the market in accordance with data collected from the video content reproducing apparatus.

A device ID & device key issuing portion 28 issues a device ID and a device key stored in a non-volatile memory of the digital video disc reproducing apparatus 70. A device ID is used to identify the reproducing apparatus 70 in accordance with a device revocation list pre-recorded on the digital video disc 60. In addition, a device ID is used to obtain a reading method for a device key and a disc key pre-recorded on the digital video disc 60 from the device revocation list pre-recorded on the digital video disc 60.

A video WM embedder 31 is a device that embeds electronic watermark information in a video content. The video WM embedder 31 calculates a hash value of a GUID and embeds the hash value as electronic watermark information in a video signal. To cause a value embedded as a video electronic watermark in a video signal and a value recorded to a BCA 62 (that will be described later) to become not correlative, a hash value is used. A hash value of a GUID is used as a title message necessary for assuring the trueness of the GUID. Since the electronic watermark and the hash value have been already described in the first embodiment, their description in the second embodiment will be omitted.

An MPEG2 encoder 32 is a video compression encoder. In this example, the MPEG2 system is used. However, another compressing system other than the MPEG2 system may be used. The MPEG2 encoder 32 includes an operation for forming a file that can be managed by a file system. A GUID is recorded in a volume descriptor.

A video encryptor 41 is a process that encrypts a video content with a disc key and a content key obtained from a physical index. A formatter 42 is a process that produces an original from which the digital video discs 60 are mass-produced with an encrypted video content, a disc key used to encrypt the video content, a physical index, a disc revocation list that identifies an illegally copied disc, and a device revocation list that identifies a reproducing apparatus that has been illegally produced or modified. A replicater 51 is a producing process that mass-produces digital video discs 60 from an original.

A content protecting system 71 is a mechanism that controls a copyright protecting technology. The content protecting system 71 has a mechanism that stores a device ID, a device key, a disc revocation list, and a disc unique number of the digital video disc 60 from which a content is reproduced, a mechanism that calibrates a built-in secure timer, and a scheme that reports the disc unique number of the medium from which the content is reproduced and a device ID of the digital video disc reproducing apparatus 70 to the managing organization 20 in a predetermined condition. In addition, the content protecting system 71 has a scheme that calibrates the built-in secure timer and reports the status of a detected electronic watermark of a film to the managing organization 20 when the content protecting system 71 is connected to the managing organization 20. In addition, the content protecting system 71 has a mechanism that references a device revocation list, a disc revocation list, and a signature list, detects an illegally reproducing state in accordance therewith, and restricts the reproducing operation.

A movie film issuing portion 101 represents a new movie shown in a movie theater. To prevent illegal actions of which for example a movie shown in a movie theater is photographed by a digital video camera or the like or a video signal obtained by telecine conversion is mass-produced as digital video discs 60 from being performed, with means for embedding signature data in a film content to be protected using an electronic watermark technology and for causing a reproducing apparatus to reproduce the signature data, the reproducing apparatus can identify an illegally distributed content.

A WM embedded movie film 102 is a movie film that is distributed from a movie company to a movie theater. Although a movie content is normally distributed as a film, compressed video data may be distributed to a digital cinema. Signature data designated by the copyright protection technology managing organization is embedded in video data by the electronic watermark technology.

A secure timer 103 is a clock whose time information cannot be easily falsified. A signature data creating portion 104 is a device that creates signature data, which is embedded as electronic watermark information in a movie film and which identifies the movie film, in accordance with the time information of the secure timer 103. A film WM embedder 105 is a device that embeds electronic watermark information in a movie film. Electronic watermark information may be embedded in a film master. Alternatively, electronic watermark information may be embedded when a movie content is copied from a film master. A timer calibrating portion 106 has a scheme that calibrates the time of the built-in secure timer of the reproducing apparatus.

A disc unique number issuing portion 27 issues disc unique numbers recorded on discs that will be mass-produced in accordance with a disc mass-production quantity issued by the disc mass-production quantity issuing portion 13. A disc unique number is composed of a random number and a verification value thereof. The random number is obtained as a random number of which a serial number or the like unique in all titles is scrambled. The verification value is calculated with MDC (Message Digest Code) or MAC (Message Authentication Code) using a key of a GUID. The disc unique number is used to identify each disc.

Fig. 14 shows an example of the structure of a data recording area of the digital video disc 60. A physical index recording area 61 is an area for a physical index. A physical index is multiplex-recorded in such a manner that it does not affect main data that is read. In the recording method, even if main data is read from all the disc area and copied, since the physical index of the multiplexed portion is not copied, this recording method is effective for a whole copying operation (bit-by-bit copying operation).

A BCA 62, a burst cutting area, is an area for a GUID that identifies a title and a disc unique number that is unique to each disc. After data is recorded on a disc medium, the BCA is recorded on the disc medium. Since a real recording method for the physical index and the BCA has been described in the first embodiment, the method will not be redundantly described in the following.

The device revocation list, the disc revocation list, and the disc key are recorded in other than an area for a video content for example a lead-in area 63 in such a manner that they cannot be rewritten.

A data area 64 is a data area for an encrypted video content in which a hash value of a GUID has been embedded as electronic watermark information.

Fig. 15 shows an example of the structure of the digital video disc reproducing apparatus 70 that reproduces data from the digital video disc 60. A ROM identifier 72 determines whether or not a disc loaded into the digital video disc reproducing apparatus 70 is a read-only digital video disc 60. When the determined result represents that the loaded disc is a read-only digital video disc 60, a switch SW1 is turned on. Otherwise, the switch SW1 is turned off.

A decryptor 73 decrypts an encrypted video content. An encryption detector 74 determines whether or not the digital video disc reproducing apparatus 70 has been revoked and whether or not a video content recorded on the digital video disc 60 has been encrypted. When the determined results represent that the reproducing apparatus has not been revoked and that the video content has been encrypted, a switch SW2 is turned on. Otherwise, the switch SW2 is turned off.

MPEG2 decoders 75 and 92 each decompresses a compressed video signal and obtains a base band video signal. A video WM detector 76 detects video electronic watermark information from the video content. After the electronic watermark information has been detected, the video WM detector 76 calculates a hash value of the GUID recorded in the BCA 62 and compares the hash value and the electronic watermark information. When they do not match, a switch SW3 is turned off. When they match or when the electronic watermark information has not been detected, the switch SW3 is turned on.

A disc revocation checker 77 is a process that compares a disc unique number recorded in the BCA 62 and a value registered in a disc revocation list stored in the non-volatile memory of the reproducing apparatus and determines whether or not the disc unique number has been registered in the disc revocation list. When they match, the disc revocation checker 77 determines that the digital video disc 60 should be revoked. At that point, a switch SW4 is turned off. When they do not match, the switch SW4 is turned on.

A non-volatile memory 79 is a non-volatile memory that stores a disc unique number as a record of a medium from which the reproducing apparatus has reproduced data. When the managing organization 20 is connected to the digital video disc reproducing apparatus 70 through a network, the record data for the reproduction medium stored in the non-volatile memory 79 is transferred to the managing organization 20 along with a device ID 89 and a device serial number 91. After the record data has been transferred to the managing organization 20, the record data is erased from the non-volatile memory 79 so as to secure a blank space. When the managing organization 20 and the digital video disc reproducing apparatus 70 are connected through a network, it is assumed that an encryption communication such as SSL authentication or VPN based on IPsec encryption is performed.

When the disc revocation list recorded on the digital video disc 60 is stored in a non-volatile memory 81, a version checker 80 compares the version of the disc revocation list that has been stored and the version of the disc revocation list recorded on the digital video disc 60. When the version of the data recorded on the digital video disc 60 is newer than the version of the data that has been stored, a switch SW6 is turned on so as to update data of the disc revocation list stored in the non-volatile memory 81.

A non-volatile memory 81 is a non-volatile memory that stores a disc revocation list. The disc revocation list.may be transferred from the managing organization 20 when it is connected to the digital video disc reproducing apparatus 70 through a network. At that point, in the same process as the disc revocation list that is updated with the medium, data stored in the non-volatile memory 81 is updated.

A secure timer 82 is a timer that is disposed in the digital video disc reproducing apparatus 70 and that cannot be easily falsified. Signature data is created in accordance with time information that is output from the secure timer 82. When the managing organization 20 is connected to the digital video disc reproducing apparatus 70 through a network, the time information of the timer 82 may be synchronized with the secure timer 103 of the managing organization 20 so as to calibrate the time information of the secure timer 82.

A signature list creator 83 creates signature data of a plurality of movie films, for example, 100 titles, that are earlier than time information that is output from the secure timer 82 and creates a signature list. The 100 titles are for example new movies that are currently shown in movie theaters, not mass-produced and sold as digital video discs 60. When the reproducing apparatus reproduces a movie content listed in the signature list, the reproducing apparatus assumes that the content has been illegally distributed.

A film WM detector 84 is a process that detects the statues of a film electronic watermark embedded in a video content that is being reproduced as electronic watermark information.

A comparator 88 is a process that compares the status of the film electronic watermark detected by the film WM detector 84 with the signature list that is stored in the signature list creator 83 and that identifies a content that has been illegally distributed. When the film WM detector 84 has not detected a film electronic watermark, a switch SW5 is turned on. When the film WM detector 84 has detected a film electronic watermark and the status represents that it has been registered in the signature list stored in the signature list creator 83, it is assumed that the reproduced content is an illegally distributed content. As that point, the switch SW5 is turned off so as to stop the reproducing operation for the content. Alternatively, a message that represents that an illegally distributed content is being reproduced is superimposed on the reproduction screen so as to inform the user thereof.

The device ID 89 is identification data for the digital video disc reproducing apparatus 70. The device ID 89 is unique to each manufacturer of the reproducing apparatus or each model thereof.

A device key 90 is combined with data calculated from the device ID 89 and the disc revocation list so as to obtain an encrypted secret disc key recorded on the digital video disc 60.

A device serial number 91 is a production serial number that uniquely identifies the digital video disc reproducing apparatus 70 and that is designated by the manufacturer thereof.

The switch SW1 is a switch that controls the reproduction for a video content in accordance with the determined result of the ROM identifier 72. The switch SW2 is a switch that controls the reproduction for a video content in accordance with the determined result of the encryption detector 74. The switch SW3 is a switch that controls the reproduction for a video content in accordance with the determined result of the video WM detector 76. The switch SW4 is a switch that controls the reproduction for a video content in accordance with the determined result of the disc revocation checker 77. The switch SW5 is a switch that controls the reproduction for a video content in accordance with the determined result of the comparator 88. The switch SW6 is a switch that controls the storage of the disc revocation list in accordance with the determined result of the version checker 80.

A switch SW1 is a switch that controls the reproduction for a video content in accordance with a determined result of the ROM identifier 72. A switch SW2 is a switch that controls the reproduction for a video content in accordance with the determined result of the encryption detector 74. A switch SW3 is a switch that controls the reproduction for a video content in accordance with the determined result of the video WM detector 76. A switch SW4 is a switch that controls the reproduction for a video content in accordance with the determined result of the disc revocation checker 77. A switch SW5 is a switch that controls the reproduction for a video content in accordance with the determined result of the comparator 88. A switch SW6 is a switch that controls the storage of the disc revocation list in accordance with the determined result of the version checker 80.

### <1. Description of editing and creating process>

Fig. 16 shows a flow of an editing and creating process for the digital video disc 60. Next, with reference to the block diagrams showing the overall system structure of Fig. 11 to Fig. 13, the editing and creating process for the digital video disc 60 shown in Fig. 16 will be described.

When a video content with which a digital video disc is created is received from the content owner 10, an editing and creating project starts. When the editing and creating project for creating the digital video disc is started, the editing and creating process 30 requests the managing organization 20 to issue a GUID (at step S211). In Fig. 16, CA represents the managing organization 20.

When the managing organization 20 has been requested to issue a GUID, the managing organization 20 issues a GUID for each title (at step S212). When the editing and creating process 30 has received a GUID, at step S214, the editing and creating process 30 embeds a hash value of the GUID in the video content (at step S213).

When the video WM embedder 31 that has received the GUID under contract with the managing organization 20 calculates a hash value of the GUID, the video WM embedder 31 embeds the hash value as electronic watermark information in a video signal of the video content (at step S214).

At step S210, namely in step S211 to step S214, it is assumed that the editing and creating process 30 and the managing organization 20 structure VPN using for example SSL or IPsec technology so that data can be transmitted and received through a secure network connection.

Along with the video signal in which the hash value has been embedded as electronic watermark information, an audio signal of the video content, a sub title such as superimposed text, a menu for video contents, and data and a program necessary for accomplishing an interactive function are encoded (at step S215).

Data of each file are multiplexed. The GUID is recorded in a volume descriptor that is file system management information (at step S216). To perform the disc producing process, an HD-DVD disc image is written to a master format (at step S217).

### <2. Description of disc producing process>

Fig. 17 shows a flow of a producing process for the digital video disc 60. Next, with reference to the block diagrams showing the overall system structure of Fig. 11 to Fig. 13 and the schematic diagram showing the relation of the disc medium of Fig. 14, the flow of the producing process for the digital video disc 60 shown in Fig. 17 will be described.

An HD-DVD disc image is received from the editing and creating process 30 (at step S221). The GUID is read from the volume descriptor. The obtained GUID is transferred from the disc production factory to the managing organization 20 (at step S222).

When the content owner 10 has provided the video content to be edited and created to the editing and creating process 30, the content owner 10 has also designated the disc mass-production quantity for an order to the disc production factory (at step S223).

When the disc production factory has received the order for the disc mass-production from the content owner 10, the disc production factory transfers the GUID and the ordered disc quantity to the managing organization 20. The disc production factory requests the managing organization 20 to issue disc unique numbers for the discs to be produced (at step S224).

The managing organization 20 identifies the title of the video content in accordance with the GUID received from the disc production factory. In addition, the managing organization 20 accurately calculates unused disc unique numbers for the disc mediums to be produced in accordance with the received ordered disc quantity (at step S225). Each of the disc unique numbers is composed of a unique random number and a verification value. A verification value is calculated by for example MDC or MAC using the GUID as a key.

The managing organization 20 authorizes the disc production factory to produce discs, namely transfers a disc key necessary for encrypting the HD-DVD disc image, a set of disc unique numbers, a device revocation list, and a disc revocation list to the disc production factory (at step S226). The device revocation list is data with which the reproducing operation of an illegally produced disc reproducing apparatus is restricted for data from a legally distributed disc medium. On the other hand, the disc revocation list is data with which the reproducing operation of a legally produced disc reproducing apparatus is restricted for data of an illegally produced disc medium.

The disc production factory combines those pieces of data received from the managing organization 20 with the HD-DVD disc image received from the editing and creating process 30, encrypts the HD-DVD disc image using a licensed encrypting technology under contract with the managing organization 20, and produces a disc master (original) (at step S227).

At step S220, namely in step S224 to step S227, it is assumed that the disc production factory and the managing organization 20 structure VPN using for example SSL or IPsec technology so that data can be transmitted and received through a secure network connection.

With the disc master (original), disc mediums are mass-produced (at step S228). A BCA is burnt on each disc medium that has been produced. In the BCA, a GUID that identifies a title and a disc unique number that is unique to each medium are recorded (at step S229).

### <3. Description of disc reproducing apparatus>

Fig. 18 and Fig. 19 show a flow of a process of the reproducing apparatus for the digital video disc 60. Due to a limited drawing space, the flow of the process is divided into two portions shown in Fig. 18 and Fig. 19. Next, with reference to the block diagram showing the structure of the digital video disc reproducing apparatus 70 shown in Fig. 15, the operation of the reproducing apparatus into which a disc medium has been loaded will be described.

First of all, the reproducing apparatus reads the physical index recording area 61 from the loaded disc medium (at step S230). When the manufacturers of the reproducing apparatus and parts thereof formally contract with the managing organization 20, it will provide a reading method for the physical index recording area 61 to the manufacturers.

After the reproducing apparatus has read the physical index recording area 61, the reproducing apparatus determines whether or not it can correctly detect the physical index (at step S231). When the reproducing apparatus has not correctly detected the physical index, the reproducing apparatus determines that the loaded disc medium should not be a reproduction-only disc medium having an encrypted content that conforms with an encryption system according to the second embodiment and performs a film WM checking process (that will be described later). When the reproducing apparatus reproduces data from only a reproduction-only disc medium, the reproducing apparatus may stop the reproducing operation and inform the user that the reproducing apparatus has stopped the reproducing operation.

When the reproducing apparatus has correctly detected the physical index, the reproducing apparatus reads data from the BCA and obtains the GUID and the disc unique number therefrom (at step S232). The reproducing apparatus checks the validity of the obtained disc unique number with a verification value (at step S233). When the reproducing apparatus has not successfully checked the validity, the reproducing apparatus determines that the loaded disc medium should be an illegally produced disc medium, stops the reproducing operation, and informs the user that the reproducing apparatus has stopped the reproducing operation through the user interface. When the reproducing apparatus has not successfully checked the validity, the flow advances to step S234.

The reproducing apparatus searches a reproduction disc medium list stored in the non-volatile memory 79 so as to determine whether or not the reproducing apparatus has reproduced data from a reproduction-only disc medium that has the same value as the disc unique number (at step S234).

When the reproduction disc medium list has the same value as the disc unique number, the flow advances to step S236. When the reproduction disc medium list does not have the same value as the disc unique number, the reproducing apparatus stores the value to the non-volatile memory 79 (at step S235). When the digital video disc reproducing apparatus 70 and the managing organization 20 are securely connected through a network, the list is transferred from the digital video disc reproducing apparatus 70 to the managing organization 20. After the list is transferred to the managing organization 20, the list is erased from the non-volatile memory 79 depending on the blank space of the memory.

The reproducing apparatus searches the disc revocation list stored in the non-volatile memory 81 for the value of the disc unique number (at step S236). When the disc revocation list has the same value as the disc unique number, the reproducing apparatus determines that the reproduction disc medium should be revoked, stops the reproducing operation, and informs the user that the reproducing apparatus has stopped the reproducing operation through the user interface.

When the disc revocation list does not have the same value as the disc unique number, the reproducing apparatus reads the device revocation list, the disc revocation list, and an encrypted disc key from the lead-in area (at step S237). Those information is required to decrypt the encrypted video content recorded on the disc. When the manufacturers of the reproducing apparatus and parts thereof formally contract with the managing organization 20, it will provide the technology for decrypting the encrypted video content to the manufacturers.

The reproducing apparatus determines whether or not it has correctly read the device revocation list, the disc revocation list, and the encrypted disc key (at step S238). When the determined result represents that the video content has not been properly encrypted and recorded, namely the reproducing apparatus has not correctly read the device revocation list, the disc revocation list, and the encrypted disc key, the reproducing apparatus determines that the loaded disc medium is not a reproduction-only disc medium that has an encrypted content that conforms with the encryption system according to the second embodiment. Thereafter, the reproducing apparatus performs the film WM checking process (that will be described later). As an example of an operating method for the copyright protection technology, means for stopping the reproducing operation and informing the user that the reproducing apparatus has stopped the reproducing operation through a user interface may be disposed.

When the reproducing apparatus has correctly read the device revocation list, the disc revocation list, and the encrypted disc key, the reproducing apparatus updates the disc revocation list (at step S239). The list has version information. When the reproducing apparatus has obtained a disc revocation list newer than the disc revocation list stored in the non-volatile memory 81, the reproducing apparatus updates the list stored in the non-volatile memory 81. The memory may have a FIFO (First-In First-Out) structure that stores a plurality of versions of the disc revocation lists and erase them in the order of an older version thereof. The reproducing apparatus reads data from the data area and starts the reproducing operation for the decrypted video content (at step S240).

After the reproducing apparatus starts reproducing the data from the medium, the reproducing apparatus detects a video electronic watermark from the video signal (at step S241). When the reproducing apparatus has not detected the video electronic watermark in a predetermined time period or in a predetermined stream amount, the reproducing apparatus determines that the disc medium should have a video content that has been illegally edited and created. At that point, the reproducing apparatus stops the reproducing operation and informs the user that the reproducing apparatus has stopped the reproducing operation through the user interface. When the manufacturers of the reproducing apparatus and parts thereof formally contract with the managing organization 20, it will provide the technology for detecting the video electronic watermark to the manufacturers.

When the reproducing apparatus has detected the video electronic watermark in the predetermined time period or in the predetermined stream amount, the reproducing apparatus determines whether or not the electronic watermark information has the same value as the hash value of the GUID (at step S242). When they do not match, the reproducing apparatus determines that the disc medium should have a video content that has been illegally edited and created or the disc medium has been illegally produced, stops the reproducing operation, and informs the user that the reproducing apparatus has stopped the reproducing operation through the user interface. When they match, the reproducing apparatus continues the reproducing operation.

When the determined result represents that the loaded disc medium is not a reproduction-only disc medium having an encrypted content that conforms with the encryption system according to the second embodiment, namely, when a video content is reproduced from a reproduction-only disc medium on which non-encrypted video content has been recorded, a recordable disc medium, or a different format disc medium such as DVD SVCD, the reproducing apparatus detects a film WM so as to determine whether or not the content recorded on the disc medium is an illegally distributed content. Fig. 20 shows a flow of the process performed at that point.

In the film WM checking process shown in Fig. 20, while the reproducing apparatus is reproducing the video content, the signature list creator 83 creates a signature list (at step S243). The signature list is a database that has a plurality of entries of signature data that identify movies that are currently shown and will be shown in movie theaters so as to prevent the content owner 10 from loosing sales profits from movie theaters for new movies and sales profits of legally distributed disc mediums against sales of disc mediums that are illegally produced before the content owner 10 authorizes movie theaters to show new movies. When the manufacturers of the reproducing apparatus and parts thereof formally contract with the managing organization 20, it will provide the method for creating the signature list to the manufacturers.

The film WM detector 84 detects a film electronic watermark. When the film WM detector 84 has detected a film electronic watermark, the film WM detector 84 determines whether or not the signature list stored in the signature list creator 83 has registered signature data corresponding to the video electronic watermark (at step S244). When the signature data has not been registered, the reproducing apparatus determines that the reproduction disc medium should have a video content of which a movie shown in a movie theater has been illegally photographed as a source and that has been edited, created, and produced with the source, stops the reproducing operation, and informs the user that the reproducing apparatus has stopped the reproducing operation through the user interface. When the signature data has been registered, the reproducing apparatus determines that the disc medium should have been edited, created, and produced under a formal contract and can securely perform the reproducing operation. When the manufacturers of the reproducing apparatus and parts thereof formally contract with the managing organization 20, it will provide the technology for detecting the film electronic watermark to the manufacturers.

According to the second embodiment of the present invention, a GUID and a hash value thereof are recorded in two types of recording methods on the digital video disc 60. In other words, a GUID is recorded in the BCA of the disc medium. A hash value of a GUID is embedded as electronic watermark information in a video content that will be burnt on a digital video disc. The digital video disc reproducing apparatus 70 reads a GUID from the BCA and compares a hash value of the GUID that has been read from the BCA and electronic watermark information embedded in the video content. When they match, the digital video disc reproducing apparatus 70 performs the reproducing operation. Thus, the digital video disc reproducing apparatus 70 can determine that the content that has been edited by the editing and creating process 30 authorized by the managing organization 20 has been recorded on the digital video disc 60 produced by the disc producing process (the mastering process 40 and the disc mass-producing process 50).

Thus, the digital video disc reproducing apparatus 70 can identify a disc medium of which an illegally obtained video signal has been edited by an illegally editing and creating process, produced by a disc production factory, and then distributed. The digital video disc reproducing apparatus 70 can restrict the reproduction for data of such an illegally distributed disc medium.

According to the second embodiment of the present invention, when information of a GUID embedded as electronic watermark information is correctly detected and the detected GUID information matches a GUID recorded in the BCA of the disc medium, the reproducing apparatus can perform the reproducing operation for the video signal. Thus, it is not useful to attack electronic watermark information so that it cannot be detected. As a result, it is not necessary to take countermeasures against an attack to the electronic watermark technology. Thus, since the applied electronic watermark technology becomes simple, it will contribute to the cost reduction thereof.

In addition, according to the second embodiment of the present invention, the mastering process 40 records a physical index issued by the managing organization 20 to the digital video disc 60. The physical index is multiplex-recorded in such a manner that it does not affect main data that is read from a reproduction-only disc medium. The digital video disc reproducing apparatus 70 performs the reproducing operation when the physical index is detected from the disc. As a result, the digital video disc reproducing apparatus 70 can determine whether or not the loaded disc is a reproduction-only disc medium that has been produced by a disc production factory authorized by the managing organization 20.

In addition, a video content recorded on the digital video disc 60 has been encrypted. Thus, the digital video disc reproducing apparatus 70 can determine whether or not the loaded disc medium is a disc medium that has been illegally produced and distributed by a disc production factory with an illegally obtained video signal by two means that are the ROM identifier 72 that detects a physical index for a reproduction-only disc medium and the encryption detector 74 that detects an encrypted video content. Thus, depending on the detected results of the ROM identifier 72 and the encryption detector 74, the digital video disc reproducing apparatus 70 can restrict the reproduction for the video content.

According to the second embodiment of the present invention, when discs whose production quantity exceeds a designated production quantity are tried to be produced, unique random numbers as disc unique numbers will be overlapped. The overlapped random numbers can be observed and detected by a managing server or the like of the managing organization 20 connected to the digital video disc reproducing apparatus 70 through a network. Thus, a disc production factory authorized by the managing organization 20 can be managed so that the factory can not produce discs whose production quantity exceeds the formally ordered quantity. In addition, since a disc unique number that is random for each disc is used, even if it is leaked out on the network, it is impossible to identify a title with the disc unique number. As a result, the privacy of the user can be protected.

In addition, according to the second embodiment of the present invention, the film WM embedder 105 embeds signature data as an electronic watermark in a film content shown in a movie theater. When the digital video disc reproducing apparatus 70 reproduces data from a disc, the signature list creator 83 creates a signature list in accordance with time information. The film WM detector 84 reads the electronic watermark information from the film content. The comparator 88 compares the signature list with the signature data. When they match, the digital video disc reproducing apparatus 70 stops the reproducing operation. Thus, the digital video disc reproducing apparatus 70 can determine whether or not the disc medium is an illegally distributed disc medium produced with a video signal illegally obtained from a movie shown in a movie theater. The digital video disc reproducing apparatus 70 can restrict the reproduction for a video content from the disc medium.

A real example of the restriction of the reproducing operation using the signature list and signature data is the same as that described with reference to Fig. 10 in the first embodiment. Thus, the description about the restriction of the reproducing operation according to the second embodiment will be omitted.

Although the present invention has been shown and described with respect to best mode embodiments thereof, it should be understood by those skilled in the art that the foregoing and various other changes, omissions, and additions in the form and detail thereof may be made therein without departing from the spirit and scope of the present invention. For example, according to the first and second embodiments, a GUID is assigned to each title. Alternatively, as long as each title can be identified, a GUID may be assigned in another manner, for example, it may be assigned to each production order for digital video discs.

In addition, according to the first and second embodiments, a GUID is recorded in the BCA and a hash value of the GUID is recorded as electronic watermark information of a video content. However, it is necessary to assure the trueness of only the value of the electronic watermark information and the value of the BCA. Thus, a GUID and a hash value thereof may be recorded in a manner that for example a GUID is recorded as electronic watermark information of a video content and a hash value of the GUID is recorded in the BCA.

In addition, according to the first and second embodiments, a physical index is multiplex-recorded in a part of the data area. Alternatively, the physical index may be multiplex-recorded in all the data area, the lead-in area, or the like. In addition, according to the first and second embodiments, after a video content in which an electronic watermark has been embedded is recorded, a GUID or the like is recorded in the BCA. However, the recording order of these data is not limited to that.

In addition, according to the first and second embodiments, before a medium is produced by a replicater, a revocation list and a disc key are recorded in the lead-in area. Alternatively, when their data amount is large, they may be encrypted and recorded in the data area.

In addition, according to the first embodiment, the reproducing apparatus has a secure timer. Alternatively, the reproducing apparatus may not have a secure timer, but reference time information of a secure timer of an copyright managing server or the like.

In addition, according to the first and second embodiments, after a determination with a global serial number or a disc unique number is performed, a determination with a signature list is performed. However, the order of the determinations is not limited to that.

According to the first and second embodiments, as a recording medium for a video content, an optical disc was described. Alternatively, the present invention can be applied to another reproduction-only recording medium such as a magnetic disc, a magnetooptical disc, an optical card, or a memory card.

As described above, according to the present invention, information that represents a legally distributed recording medium is recorded on a recording medium. Thus, when the reproducing apparatus reproduces data from the recording medium, the reproducing apparatus reads the information. In accordance with the information, the reproducing apparatus can restrict the reproduction for data from an illegally distributed recording medium. Thus, the profit of the copyright owner can be protected against illegal copies of video contents.

## Claims

1. A recording medium on which data of a video content is recorded, title information that represents a title of the video content or a title message necessary for assuring the trueness of the title information being embedded as electronic watermark information in data of the video content, the title information or the title message being recorded in other than a recording area for the data of the video content.

2. The recording medium as set forth in claim 1,
wherein the title message is obtained from the title information using a one-directional function.

3. A recording medium producing method for producing a recording medium on which data of a video content is recorded, the method comprising the steps of:
editing the data of the video content;
embedding title information that represents a title of the video content or a title message necessary for assuring the trueness of the title information as electronic watermark information in data of the video content; and
recording the title information or the title message in other than a recording area for the data of the video content.

4. The recording medium producing method as set forth in claim 3,
wherein the title message is obtained from the title information using a one-directional function.

5. The recording medium producing method as set forth in claim 3, further comprising the step of:
causing a copyright managing server connected through a network to provide the title information.

6. A reproducing method for a recording medium on which data of a video content is recorded, title information that represents a title of the video content or a title message necessary for assuring the trueness of the title information being embedded as electronic watermark information in data of the video content, the title information or the title message being recorded in other than a recording area for the data of the video content, the method comprising the steps of:
detecting the title information or the title message recorded in other than the recording area for the data;
detecting title information or a title message embedded as the electronic watermark information;
determining whether or not the trueness of the title information or the title message detected at the first and second title information detecting steps are assured; and
restricting a reproducing operation for the recording medium when the trueness has not been assured at the determining step.

7. A reproducing apparatus for a recording medium on which data of a video content is recorded, title information that represents a title of the video content or a title message necessary for assuring the trueness of the title information being embedded as electronic watermark information in data of the video content, the title information or the title message being recorded in other than a recording area for the data of the video content, the apparatus comprising:
a first title information detecting portion for detecting the title information or the title message recorded in other than the recording area for the data;
a second title information detecting portion for detecting title information or a title message embedded as the electronic watermark information;
a determining portion for determining whether or not the trueness of the title information or the title message detected by the first and second title information detecting portions are assured; and
a controlling portion for restricting a reproducing operation for the recording medium when the trueness has not been assured by the determining portion.

8. A recording medium on which data of a video content is recorded, medium identification information and a medium revocation list being recorded on the recording medium, the medium identification information uniquely identifying each of recording mediums, the medium revocation list designating a recording medium to be revoked with at least the medium identification information or an identification message necessary for assuring the trueness of the medium identification information.

9. The recording medium as set forth in claim 8,
wherein the identification message is obtained from the medium identification information using a one-directional function.

10. The recording medium as set forth in claim 8,
wherein the medium identification information is successive for recording mediums and unique thereto, and
wherein the medium revocation list designates a recording medium to be revoked with the title information of the video content and the identification message.

11. The recording medium as set forth in claim 8,
wherein the medium identification information is not successive for recording mediums and is unique thereto, and
wherein the medium revocation list designates a recording medium to be revoked with the medium identification information.

12. The recording medium as set forth in claim 8,
wherein the medium revocation list has version information.

13. The recording medium as set forth in claim 8,
wherein a device revocation list that designates a device to be revoked is also recorded.

14. A recording medium producing method for producing a recording medium on which data of a video content is recorded, the method comprising the steps of:
editing the data of the video content;
recording a medium revocation list that designates a recording medium to be revoked with at least medium identification information or an identification message, the medium identification information uniquely identifying recording mediums, the identification message being necessary for assuring the trueness of the medium identification information; and
recording the medium identification information for each medium in accordance with other than a recording method for the data of the video content.

15. The recording medium producing method as set forth in claim 14,
wherein the identification message is obtained from the medium identification information using a one-directional function.

16. The recording medium producing method as set forth in claim 14,
wherein the medium identification information is successive for recording mediums and unique thereto, and
wherein the medium revocation list designates a recording medium to be revoked with the title information of the video content and the identification message.

17. The recording medium producing method as set forth in claim 14,
wherein the medium identification information is not successive for recording mediums and is unique thereto, and
wherein the medium revocation list designates a recording medium to be revoked with the medium identification information.

18. The recording medium producing method as set forth in claim 14,
wherein the medium revocation list has version information.

19. The recording medium producing method as set forth in claim 14,
wherein a device revocation list that designates a device to be revoked is also recorded to the recording medium.

20. A reproducing method for a recording medium on which data of a video content is recorded, medium identification information and a medium revocation list being recorded on the recording medium, the medium identification information uniquely identifying each of recording mediums, the medium revocation list designating a recording medium to be revoked with at least the medium identification information or an identification message necessary for assuring the trueness of the medium identification information, the method comprising the steps of:
reading the medium identification information;
reading the medium revocation list;
storing the medium identification information that has been read or the identification message of the medium identification information to a memory;
determining whether or not the medium identification information or the identification message that has been stored is contained in the medium revocation list; and
restricting a reproducing operation for the recording medium when the determined result at the medium list determining step represents that the recording medium should be revoked.

21. The reproducing method as set forth in claim 20,
wherein the medium revocation list has version information.

22. The reproducing method as set forth in claim 21, further comprising the step of:
updating the medium revocation list with a copyright managing server connected to a device to be restricted for its reproducing operation through a network.

23. The reproducing method as set forth in claim 20,
wherein a device revocation list designating a illegal device to be revoked is recorded on the recording medium, and
wherein the reproducing method further comprises the steps of:
reading the device revocation list;
storing the device revocation list that has been read;
determining whether or not a device that is reproducing data is contained in the device revocation list; and
restricting a reproducing operation of the device for the recording medium when the determined result at the device list determining step represents that the device should be revoked.

24. The reproducing method as set forth in claim 23, further comprising the step of:
updating the device revocation list with a copyright managing server connected to a device to be restricted for its reproducing operation through a network.

25. A reproducing method for a recording medium on which data of a video content is recorded, medium identification information being recorded on the recording medium, the medium identification information uniquely identifying each of recording mediums, the method comprising the steps of:
reading the medium identification information;
a medium identification information storing portion for storing the medium identification information that has been read or an identification message of the medium identification information to a memory;
connecting a copyright managing server through a network, receiving a medium revocation list that designates a recording medium to be revoked with the medium identification information or an identification message necessary for assuring the trueness of the medium identification information from the copyright managing server, and determining whether or not the stored medium identification information or the stored identification message of the medium identification information is contained in the medium revocation list; and
restricting a reproducing operation for the recording medium when the determined result at the determining step represents that the recording medium should be revoked.

26. The reproducing method as set forth in claim 25,
wherein the medium revocation list has version information.

27. The reproducing method as set forth in claim 26, further comprising the step of:
updating the medium revocation list with the copyright managing server.

28. The reproducing method as set forth in claim 25,
wherein a device revocation list designating a illegal device to be revoked is recorded on the recording medium, and
wherein the reproducing method further comprises the steps of:
reading the device revocation list;
determining whether or not a device that is reproducing data is contained in the device revocation list; and
restricting a reproducing operation of the device for the recording medium when the determined result at the device list determining step represents that the device should be revoked.

29. The reproducing method as set forth in claim 28, further comprising the step of:
updating the device revocation list with a copyright managing server.

30. A reproducing apparatus for a recording medium on which data of a video content is recorded, the reproducing apparatus comprises:
a reading portion for reading medium identification information and a medium revocation list, the medium identification information uniquely identifying each of recording mediums, the medium revocation list designating a recording medium to be revoked with at least the medium identification information or an identification message necessary for assuring the trueness of the medium identification information;
a medium identification information storing portion for storing the medium identification information that has been read or the identification message of the medium identification information;
a determining portion for determining whether or not the stored medium identification information or the stored identification message is contained in the medium revocation list; and
a controlling portion for restricting a reproducing operation for the recording medium when the determined result at the determining step represents that the recording medium should be revoked.

31. The reproducing apparatus as set forth in claim 30,
wherein the medium revocation list has version information.

32. The reproducing apparatus as set forth in claim 31,
wherein the medium revocation list is updated by a copyright managing server connected to a device to be restricted for its reproducing operation through a network.

33. The reproducing apparatus as set forth in claim 30,
wherein a device revocation list designating a illegal device to be revoked is recorded on the recording medium, and
wherein the reproducing apparatus further comprises:
a device list reading portion for reading the device revocation list;
a device list storing portion for storing the device revocation list that has been read;
a device list determining portion for determining whether or not a device that is reproducing data is contained in the device revocation list; and
a controlling portion for restricting a reproducing operation of the device for the recording medium when the determined result of the device list determining portion represents that the device should be revoked.

34. The reproducing apparatus as set forth in claim 33,
wherein the device revocation list is updated by a copyright managing server connected to a device to be restricted for its reproducing operation through a network.

35. A reproducing apparatus for a recording medium on which data of a video content is recorded, the reproducing apparatus comprising:
a reading portion for reading medium identification information uniquely identifying each of recording mediums;
a medium identification information storing portion for storing the medium identification information that has been read or an identification message of the medium identification information;
a medium list receiving portion for receiving a medium revocation list that designates a recording medium to be revoked with the medium identification information or the identification message necessary for assuring the trueness of the medium identification information from a copyright managing server;
a medium list determining portion for determining whether or not the stored medium identification information or the stored identification message is contained in the received medium revocation list; and
a controlling portion for restricting a reproducing operation for the recording medium when the determined result of the medium list determining portion represents that the recording medium should be revoked.

36. The reproducing apparatus as set forth in claim 35,
wherein the medium revocation list has version information.

37. The reproducing apparatus as set forth in claim 36, further comprising:
a medium list storing portion for storing the received medium revocation list,
wherein when version information of the stored medium revocation list is newer than version information of the medium revocation list that the copyright managing server has, the stored medium revocation list is updated with the medium revocation list that the copyright managing server has.

38. The reproducing apparatus as set forth in claim 35,
wherein a device revocation list designating a illegal device to be revoked is recorded on the recording medium,
wherein the reading portion is configured to read the device revocation list, and
wherein the reproducing apparatus further comprises:
a device list determining portion for determining whether or not information about a device that is reproducing data is contained in the device revocation list; and
a controlling portion for restricting a reproducing operation of the device for the recording medium when the determined result of the device list determining portion represents that the device should be revoked.

39. The reproducing apparatus as set forth in claim 38,
wherein the device revocation list is updated by the copyright managing server.

40. A copyright managing method for a system of which a plurality of reproducing apparatuses and a copyright managing server authorized by a copyright supervisor are connected through a network, the copyright managing method comprising the steps of:
causing each of the reproducing apparatuses to record data of a video content and reproduce data from each recording medium on which medium identification information that uniquely identifies the recording medium is recorded;
causing each of the reproducing apparatuses to read the medium identification information from the recording medium and transmit an identification message obtained from the medium identification information using a one-directional function;
causing the copyright managing server to receive the device identification information and the identification message;
causing the copyright managing server to determine whether or not the plurality of reproducing apparatuses have reproduced data from the same recording medium in accordance with a set of received data; and
causing the copyright managing server to add at least the medium identification information or the identification information that designates the recording medium to the medium revocation list when a predetermined number of reproducing apparatuses have reproduced the same medium identification information from recording mediums.

41. A reproducing method for reproducing data of a video content from a recording medium, signature data with which a reproducing operation of a device that has a predetermined mechanism is restricted until a calendar designated by a copyright supervisor being embedded as an electronic watermark in the data of the video content, the signature data being created in accordance with time information, the reproducing method comprising the steps of:
detecting the signature data from the recording medium when the data of the video content is reproduced from the recording medium;
creating a list of signature data as calendar information with which the reproducing operation of the device having the predetermined mechanism is restricted in accordance with the detected signature data; and
restricting the reproducing operation of the device having the predetermined mechanism for a recording medium on which the signature data is recorded until a calendar designated by the copyright supervisor.

42. The reproducing method as set forth in claim 41,
wherein the list creating step is performed using a timer that cannot be easily falsified and by referencing the timer in accordance with the detected signature data so as to create the list of the signature data.

43. The reproducing method as set forth in claim 42,
wherein the timer is calibrated by a copyright managing server connected to the device having the predetermined mechanism through a network.

44. The reproducing method as set forth in claim 41,
wherein the list creating step is performed by referencing a timer that cannot be easily falsified, the timer being disposed in a copyright managing server connected to the device having the predetermined mechanism through a network so as to create the list of the signature data in accordance with the detected signature data.

45. A reproducing apparatus for reproducing data of a video content from a recording medium, the reproducing apparatus comprising:
a signature data detecting portion for detecting signature data from the recording medium when the data of the video content is reproduced from the recording medium, the signature data with which a reproducing operation of the reproducing apparatus is restricted until a calendar designated by a copyright supervisor being embedded as an electronic watermark in the data of the video content, the signature data being created in accordance with time information;
a list creating portion for creating a list of signature data as calendar information with which the reproducing operation of the reproducing apparatus is restricted in accordance with the detected signature data; and
a controlling portion for restricting the reproducing operation of the reproducing apparatus for a recording medium on which the signature data is recorded until a calendar designated by the copyright supervisor as long as the signature data is contained in the list.

46. The reproducing apparatus as set forth in claim 45,
wherein the list creating portion is configured to have a timer that cannot be easily falsified and reference the timer in accordance with the detected signature data so as to create the list of the signature data.

47. The reproducing apparatus as set forth in claim 46,
wherein the timer is calibrated by a copyright managing server connected to the reproducing apparatus through a network.

48. The reproducing apparatus as set forth in claim 45,
wherein the list creating portion is configured to reference a timer that cannot be easily falsified and that is disposed in a copyright managing server connected to the reproducing apparatus through a network so as to create the list of the signature data in accordance with the detected signature data.

49. A copyright managing method for a copyright managing system of which a plurality of reproducing apparatuses and a copyright managing server authorized by a copyright supervisor are connected through a network, the copyright managing method comprising the steps of:
embedding signature data with which a reproducing operation of each of devices that have a predetermined mechanism is restricted until a calendar designated by a copyright supervisor as an electronic watermark in a video content, the signature data being created in accordance with time information;
causing each of the devices to detect the signature data and create a list of the signature data as calendar information with which the reproducing operation of the device is restricted in accordance with the detected signature data; and
restricting the reproducing operation of the device for a recording medium on which the signature data is recorded until a calendar designated by the copyright supervisor as long as the signature data is contained in the list.

50. The copyright managing method as set forth in claim 49,
wherein the signature list of the device is updated by the copyright managing server.
